# EUROPEAN PATENT APPLICATION

(11) **EP 4 597 882 A1**
(43) Date of publication of application: **06.08.2025**
(21) Application number: 23871737.5
(22) Date of filing: 01.09.2023
(51) Int. Cl.: H04B 10/516, H04B 10/116

(54) **OPTICAL COMMUNICATION DEVICE, OPTICAL COMMUNICATION METHOD, AND PROGRAM**

(30) Priority: 26.09.2022 JP 2022152931
(71) Applicant: Kyocera Corporation, Kyoto-shi, Kyoto 612-8501 (JP)
(72) Inventor: YAMAZAKI, Chiharu, Kyoto-shi, Kyoto 612-8501 (JP); INAKOSHI, Atsuhisa, Kyoto-shi, Kyoto 612-8501 (JP); FUKUTA, Noriyoshi, Kyoto-shi, Kyoto 612-8501 (JP); ADACHI, Hiroyuki, Kyoto-shi, Kyoto 612-8501 (JP)
(74) Representative: Viering, Jentschura & Partner mbB Patent- und Rechtsanwälte
(86) International application number: PCT/JP2023/032055
(87) International publication number: WO 2024/070497

(57) **Abstract**

An optical communication apparatus that performs optical communication that is wireless communication using light includes an optical communicator including a plurality of light receiving elements and a plurality of light emitting elements and supporting the optical communication of a plurality of colors and a controller configured to control the optical communicator to perform reception of an optical signal from another optical communication apparatus and transmission of an optical signal to the other optical communication apparatus by using an identical color selected from among the plurality of colors or a pair of colors having continuous wavelengths.

## Description

### TECHNICAL FIELD

The present disclosure relates to an optical communication apparatus, an optical communication method, and a program.

### BACKGROUND OF INVENTION

An optical communication system is known which performs wireless communication using light (particularly, visible light) as a transmission medium, for example, in underwater communication. Since light has high directivity, optical communication systems in the related art generally perform, on the assumption that optical communication apparatuses on a transmission side and a receiving side are fixed, one-to-one optical communication with the transmitting side and the receiving side facing each other.

### CITATION LIST

### PATENT LITERATURE

Patent Document 1: JP 4-103232 A

### SUMMARY

In a first aspect, an optical communication apparatus is an apparatus for performing optical communication that is wireless communication using light. The optical communication apparatus includes an optical communicator including a plurality of light receiving elements and a plurality of light emitting elements and supporting the optical communication of a plurality of colors and a controller configured to control the optical communicator to perform reception of an optical signal from another optical communication apparatus and transmission of an optical signal to the other optical communication apparatus by using an identical color selected from among the plurality of colors and/or a pair of colors having continuous wavelengths.

In a second aspect, an optical communication method is a method for performing optical communication that is wireless communication using light. The optical communication method includes a step of controlling an optical communicator including a plurality of light receiving elements and a plurality of light emitting elements and supporting the optical communication of a plurality of colors. The step of controlling includes a step of controlling the optical communicator to perform reception of an optical signal from another optical communication apparatus and transmission of an optical signal to the other optical communication apparatus by using an identical color selected from among the plurality of colors and/or a pair of colors having continuous wavelengths.

In a third aspect, a program causes an optical communication apparatus that performs optical communication that is wireless communication using light to perform a step of controlling an optical communicator including a plurality of light receiving elements and a plurality of light emitting elements and supporting the optical communication of a plurality of colors. The step of controlling includes a step of controlling the optical communicator to perform reception of an optical signal from another optical communication apparatus and transmission of an optical signal to the other optical communication apparatus by using an identical color selected from among the plurality of colors and/or a pair of colors having continuous wavelengths.

### BRIEF DESCRIPTION OF THE DRAWINGS

FIG. 1 is a diagram illustrating a configuration example of an optical communication system according to first and second embodiments.
FIG. 2 is a diagram schematically illustrating a transmission operation of a terminal apparatus in UL according to the first and second embodiments.
FIG. 3 is a diagram for explaining an operation overview of the optical communication system according to the first and second embodiments.
FIG. 4 is a diagram illustrating a configuration example of a base station apparatus according to the first and second embodiments.
FIG. 5 is a diagram illustrating a configuration example of a terminal apparatus according to the first and second embodiments.
FIG. 6 is a diagram for explaining a configuration example of a communication frame used in the optical communication system according to the first and second embodiments.
FIG. 7 is a diagram illustrating a first configuration example of a reception system in an optical communicator corresponding to a plurality of colors.
FIG. 8 is a diagram illustrating a second configuration example of the reception system in the optical communicator corresponding to a plurality of colors.
FIG. 9 is a diagram illustrating a first configuration example of a transmission system in the optical communicator corresponding to a plurality of colors.
FIG. 10 is a diagram illustrating a second configuration example of the transmission system in the optical communicator corresponding to a plurality of colors.
FIG. 11 is a diagram illustrating a first arrangement example of light receiving elements and light emitting elements according to the first and second embodiments.
FIG. 12 is a diagram illustrating a second arrangement example of the light receiving elements and the light emitting elements according to the first and second embodiments.
FIG. 13 is a diagram illustrating a third arrangement example of the light receiving elements and the light emitting elements according to the first and second embodiments.
FIG. 14 is a diagram illustrating a fourth arrangement example of the light receiving elements and the light emitting elements according to the first and second embodiments.
FIG. 15 is a diagram illustrating another arrangement example of the light receiving elements and the light emitting elements according to the first and second embodiments.
FIG. 16 is a diagram illustrating an outer appearance configuration example of the terminal apparatus to which a cluster arrangement is applied according to the first and second embodiments.
FIG. 17 is a diagram illustrating an outer appearance configuration example of the base station apparatus to which the cluster arrangement is applied according to the first and second embodiments.
FIG. 18 is a diagram illustrating an example of optical communication between the base station apparatus and the terminal apparatus to each of which the cluster arrangement is applied according to the first and second embodiments.
FIG. 19 is a diagram illustrating a transmission example of optical signals of a plurality of colors of the base station apparatus to which the cluster arrangement is applied according to the first and second embodiments.
FIG. 20 is a diagram for explaining an establishment operation for an optical communication connection according to the second embodiment.
FIG. 21 is a diagram illustrating an example of an establishment operation sequence for the optical communication connection according to the second embodiment.
FIG. 22 is a diagram illustrating a base station apparatus-initiated operation example according to the second embodiment.
FIG. 23 is a diagram illustrating an operation example of UL communication using two colors according to the second embodiment.
FIG. 24 is a diagram illustrating an operation example of DL communication using two colors according to the second embodiment.
FIG. 25 is a diagram illustrating a terminal apparatus-initiated operation example according to the second embodiment.
FIG. 26 is a diagram illustrating an operation example relating to load balancing of each color according to the second embodiment.
FIG. 27 is a diagram for explaining an optical communication apparatus according to another embodiment.
FIG. 28 is a diagram for explaining an optical communication apparatus according to another embodiment.
FIG. 29 is a diagram for explaining an operation communication system according to another embodiment.

### DESCRIPTION OF EMBODIMENTS

In the future, an optical communication system is expected in which optical communication between a plurality of terminal apparatuses and a base station apparatus is achieved. In the optical communication system, various colors can be used as colors to be used for optical communication, and the respective colors used for the optical communication can be appropriately used in different terminal apparatuses to improve throughput of the optical communication system. However, the optical communication system in the related art does not perform control to use the colors used for optical communication between the terminal apparatuses and the base station apparatus in different terminal apparatuses and has room for improvement in terms of improving the throughput of the optical communication system.

The present disclosure provides an improvement of throughput of an optical communication system.

An optical communication system according to an embodiment will be described with reference to the drawings. In the description of the drawings, the same or similar parts are denoted by the same or similar reference signs.

The optical communication system according to an embodiment is a system that performs optical communication using visible light as an example of light. However, the optical communication system may be a system that further uses light other than the visible light, for example, an infrared light, to perform optical communication. The optical communication system according to an embodiment is a system that performs optical communication underwater. However, the optical communication system is not limited to a system that performs optical communication underwater and may be a system that performs, for example, optical communication in space.

### (1) First Embodiment

First, an optical communication system according to a first embodiment is described.

### (1.1) Overview of Optical Communication System

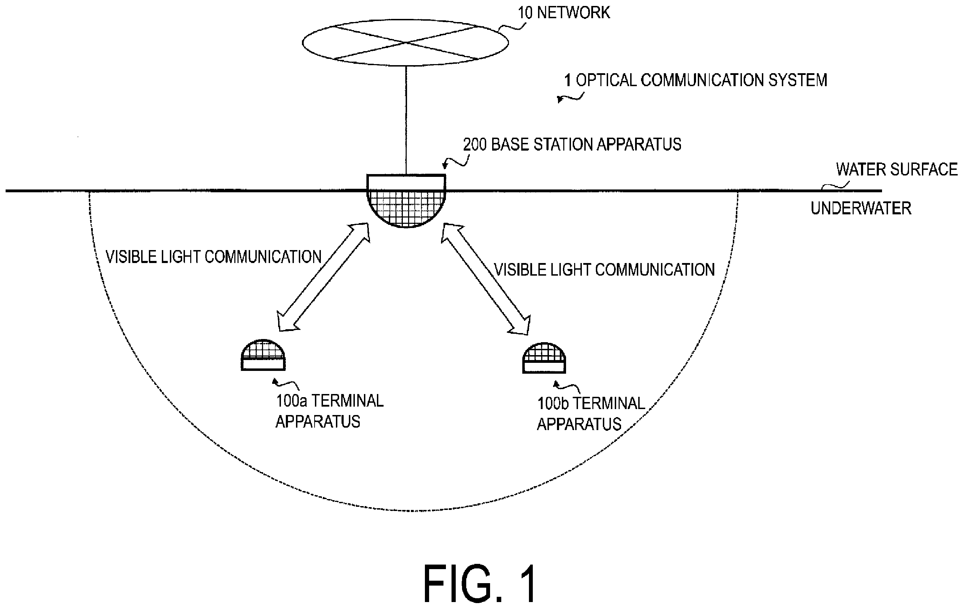

FIG. 1 illustrates a configuration example of an optical communication system 1 according to the present embodiment. The optical communication system 1 includes a plurality of terminal apparatuses 100 (100a, 100b) and a base station apparatus 200. However, the number of terminal apparatuses 100 and the number of base station apparatuses 200 are not limited to those in the illustrated example.

Each terminal apparatus 100 is an example of an optical communication apparatus. The base station apparatus 200 is another example of the optical communication apparatus. Each of the terminal apparatuses 100 and the base station apparatus 200 includes a plurality of light receiving and emitting units whose optical axes (in a different point of view, directivity of optical communication) are directed in different directions. Each light receiving and emitting unit includes at least one light receiving element and at least one light emitting element. Accordingly, each of the terminal apparatuses 100 and the base station apparatus 200 can use light as a transmission medium and use a plurality of light receiving and emitting units to perform optical communication for various methods.

The base station apparatus 200 selects its own light receiving and emitting unit corresponding to a direction of each terminal apparatus 100 connected to the base station apparatus 200 and uses the selected light receiving and emitting unit to perform optical communication with the terminal apparatus 100. Similarly, the terminal apparatus 100 selects its own light receiving and emitting unit corresponding to a direction of the base station apparatus 200 which is a serving base station for (or which is connected to) the terminal apparatus 100, and uses the selected light receiving and emitting unit to perform optical communication with the base station apparatus 200. Note that base station apparatus 200 transmits a synchronization optical signal and/or a reference optical signal (hereinafter, these signals may be collectively referred to as a "pilot optical signal") specific to the base station apparatus 200 in all directions the base station apparatus 200 can support. The terminal apparatus 100 may specify the direction of the base station apparatus 200 based on such a pilot optical signal, specify its own light receiving and emitting unit corresponding to the direction, and use the specified light receiving and emitting unit to perform optical communication with the base station apparatus 200.

In the illustrated example, the base station apparatus 200 is located near a water surface and fixed to, for example, a buoy. The base station apparatus 200 has, for example, a hemispherical housing having a surface on which a plurality of light receiving and emitting units are arranged in a two dimensional array. The base station apparatus 200 is communicably connected to a network 10 via a backhaul line. The backhaul line may be a wireless line. The backhaul line may be a wired line. In order to efficiently secure a communication area underwater, the base station apparatus 200 may be installed at a predetermined distance from another base station apparatus. Note that, in FIG. 1, the communication area of the base station apparatus 200 is indicated by a broken line. Such a communication area is also referred to as a "cell".

The terminal apparatus 100 is underwater. The terminal apparatus 100 is configured to be movable underwater. For example, the terminal apparatus 100 may be a self-propelled terminal apparatus 100 such as an underwater robot or an underwater drone. The terminal apparatus 100 is connected to the base station apparatus 200 and performs optical communication with the connected base station apparatus 200 (serving base station). The terminal apparatus 100 may include a sensor such as an image sensor and generate sensor data. For example, each terminal apparatus 100 may transmit uplink (UL) data including the sensor data to the base station apparatus 200 (serving base station) through the optical communication. The terminal apparatus 100 may receive downlink (DL) data including instruction data from the base station apparatus 200 (serving base station) through the optical communication. The terminal apparatus 100 may move and perform a sensing operation (imaging or the like) based on the instruction data.

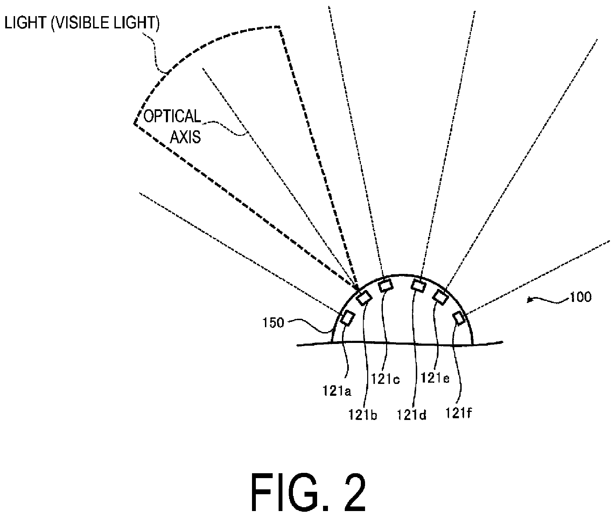

FIG. 2 is a diagram schematically illustrating a transmission operation of the terminal apparatus 100 in the UL according to the present embodiment.

In the terminal apparatus 100, for example, a plurality of light emitting elements 121 (121a, 121b,.) are arranged in a transparent housing 150, and the light emitting elements 121 transmit optical signals to the base station apparatus 200 via the transparent housing 150. The plurality of light emitting elements 121 are arranged in a two dimensional array along a curved surface of the transparent housing 150, and have the optical axes directed in different directions. For example, the optical axis of each of the light emitting elements 121 is directed in the normal direction of the curved surface of the transparent housing 150. Such a configuration enables optical communication performed in various directions although light has high directivity.

As described above, in the optical communication system 1 according to the present embodiment, the base station apparatus 200 can cover a wide communication area. Each of the terminal apparatuses 100 and the base station apparatus 200 appropriately selecting the light receiving and emitting unit used for optical communication makes it possible to realize optical communication that follows movement of each of the terminal apparatuses 100.

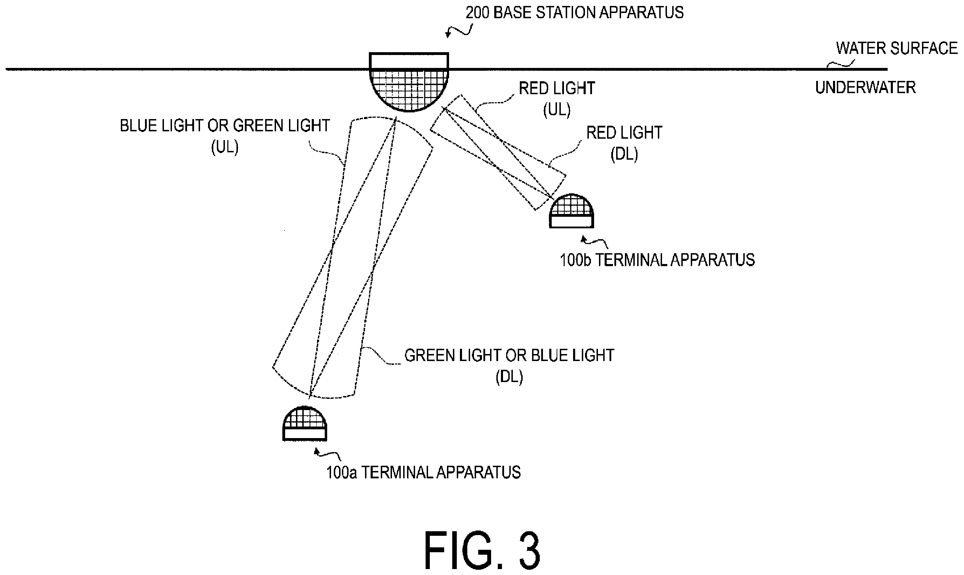

FIG. 3 is a diagram for explaining an operation overview of the optical communication system 1 according to the present embodiment.

In the present embodiment, each of the terminal apparatuses 100 and the base station apparatus 200 has a configuration supporting optical communication of a plurality of colors. Differentiating colors used for the optical communications between the terminal apparatuses 100 enables optical signals to be multiplexed and demultiplexed for each color, improving the throughput of the optical communication system. When optical communication is performed underwater, propagation characteristics vary depending on the color (i.e., wavelength) of light used for the optical communication. For example, when four colors of blue, green, red, and yellow are assumed, even if a transmission output is the same, blue and green have smaller attenuation rates than red and yellow, and thus generally propagate far.

Note that in the following embodiment, an example is mainly described in which colors available for optical communication are a total of three colors of red (R), green (G), and blue (B). However, the colors available for optical communication may be four or more colors, for example, red (R), green (G), blue (B), and yellow (Y). The colors available for optical communication may be two colors, for example, green (G) and blue (B).

In the present embodiment, an appropriate color is assigned to each terminal apparatus 100. In the present embodiment, a time division duplex (TDD) scheme is applied to the optical communication between the terminal apparatus 100 and the base station apparatus 200. Accordingly, each terminal apparatus 100 can use a color identical for the UL and the DL in optical communication with the base station apparatus 200.

In other words, in the present embodiment, the terminal apparatus 100 includes a plurality of light receiving elements and a plurality of light emitting elements and has a configuration supporting optical communication of a plurality of colors. The terminal apparatus 100 performs reception (DL) of an optical signal from the base station apparatus 200 and transmission (UL) of an optical signal to the base station apparatus 200 in a time division manner by the TDD scheme. The terminal apparatus 100 uses the identical color selected from among the plurality of colors for reception (DL) and transmission (UL) of the optical signal. Similarly, in the present embodiment, the base station apparatus 200 includes a plurality of light receiving elements and a plurality of light emitting elements and has a configuration supporting optical communication of a plurality of colors. The base station apparatus 200 performs reception (UL) of an optical signal from the terminal apparatus 100 and transmission (DL) of an optical signal to the terminal apparatus 100 in the time division manner according to the TDD scheme. The base station apparatus 200 uses the identical color selected from among the plurality of colors for reception (UL) and transmission (DL) of the optical signal.

In the present embodiment, for example, based on a distance between the terminal apparatus 100 and the base station apparatus 200, an appropriate color is assigned to the terminal apparatus 100. As for a method of measuring (estimating) the distance between the terminal apparatus 100 and the base station apparatus 200, the optical communication apparatus (the terminal apparatus 100 and/or the base station apparatus 200) may include means for transmitting and receiving a sound wave (sound) and may measure the distance by detecting a position of a communication partner using the sound wave (sound). The optical communication apparatus (the terminal apparatus 100 and/or the base station apparatus 200) may include a camera, and may measure the distance by detecting the position of the communication partner using the camera. When the transmission output (light emission intensity) of the pilot optical signal is known, the distance may be measured based on a path loss which is a difference between the light emission intensity and a light reception intensity detected on the receiving apparatus. The terminal apparatus 100 and the base station apparatus 200 transmit and receive an optical signal of a first color when a distance between each of the terminal apparatus 100 and the base station apparatus 200, and the other optical communication apparatus is a first distance. On the other hand, when the distance is a second distance larger than the first distance, the terminal apparatus 100 and the base station apparatus 200 transmit and receive an optical signal of a second color having an attenuation rate underwater smaller than the first color. For example, the first color is red (R) and the second color is green (G) or blue (B). FIG. 3 illustrates an example in which green (G) or blue (B) is assigned to the terminal apparatus 100a farther from the base station apparatus 200 and red (R) is assigned to the terminal apparatus 100b closer to the base station apparatus 200. In this way, the assignment of the appropriate color to each of the terminal apparatuses 100 can improve the throughput of the optical communication system.

Here, use of the identical color for the UL and the DL in the optical communication according to the TDD scheme enables reversibility of UL and DL propagation paths to be utilized. For example, the terminal apparatus 100 having received a DL optical signal can estimate a DL propagation path state based on the received signal and regard the estimated propagation path state as a UL propagation path to control UL transmission, and thereby can perform UL optical communication adapted to the propagation path. Similarly, the base station apparatus 200 having received a UL optical signal can estimate a UL propagation path state based on the received signal and regard the estimated propagation path state as a DL propagation path to control DL transmission, and thereby can perform DL optical communication adapted to the propagation path.

However, in the optical communication apparatus (the terminal apparatus 100 and the base station apparatus 200), since the light receiving element receiving the optical signal and the light emitting element transmitting the optical signal are different elements, the UL propagation state and the DL propagation state are different from each other, and the reversibility of the propagation path may not need to be used. Therefore, in the present embodiment, a plurality of light receiving elements and a plurality of light emitting elements are arranged in a distributed manner in an optical communication apparatus, and the light emitting element close to the light receiving element having received an optical signal is controlled to transmit the optical signal, thereby enabling the reversibility of the propagation path to be utilized. Specific examples of the arrangement the light receiving elements and the light emitting elements are described later.

In other words, in the present embodiment, the terminal apparatus 100 performs control such that a light emitting element close to a light receiving element that receives an optical signal (DL optical signal) from the base station apparatus 200 transmits an optical signal (UL optical signal) to the base station apparatus 200. The terminal apparatus 100 estimates a propagation path state based on the optical signal (DL optical signal) received by the light receiving element from the base station apparatus 200, and controls transmission of the optical signal (UL optical signal) from the light emitting element to the base station apparatus 200 based on the estimated propagation path state.

Note that the light receiving element and the light emitting element are "close to each other" means that the light receiving element and the light emitting element are close to each other to the extent that the reversibility of the propagation path can be utilized, and the light receiving element and the light emitting element may not need to be in contact with each other (adjacent to each other).

Similarly, in the present embodiment, the base station apparatus 200 performs control such that a light emitting element close to a light receiving element that receives an optical signal (UL optical signal) from the terminal apparatus 100 transmits an optical signal (DL optical signal) to the terminal apparatus 100. The base station apparatus 200 estimates a propagation path state based on the optical signal (UL optical signal) received by the light receiving element from the terminal apparatus 100, and controls transmission of the optical signal (DL optical signal) from the light emitting element to the terminal apparatus 100 based on the estimated propagation path state.

### (1.2) Configuration Example of Optical Communication Apparatus

In the present embodiment, a configuration example of the optical communication apparatus is described.

### (1.2.1) Configuration Example of Base Station Apparatus

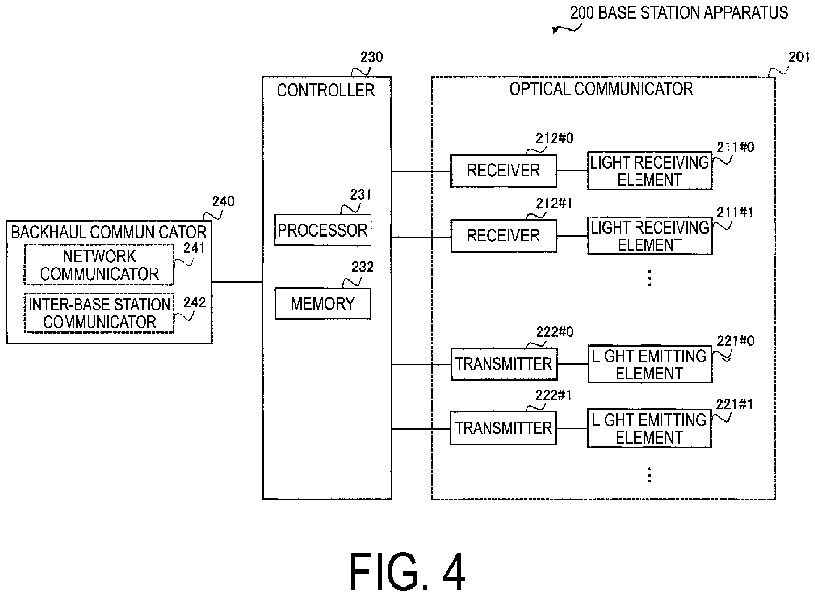

FIG. 4 is a diagram illustrating a configuration example of the base station apparatus 200 according to the present embodiment. The base station apparatus 200 includes an optical communicator 201, a controller 230, and a backhaul communicator 240. The base station apparatus 200 may include a battery for supplying electrical power necessary for the base station apparatus 200 to operate. The optical communicator 201 is connected to the controller 230 via a cable, and may be configured separately from the controller 230.

The optical communicator 201 performs optical communication (visible light communication in the present embodiment) with the terminal apparatus 100 under the control of the controller 230. The optical communicator 201 has a configuration supporting optical communication of a plurality of colors. A specific example of the configuration will be described later. In other words, the optical communicator 201 has a function of transmitting and receiving optical signals of a plurality of colors. A specific example of the configuration will be described later. In the present embodiment, the optical communicator 201 includes a plurality of light receiving elements 211 (211#0, 211#1, ...), a plurality of receivers 212 (212#0, 212#1, ...), a plurality of light emitting elements 221 (221#0, 221#1, ...), and a plurality of transmitters 222 (222#0, 222#1, ...).

Each of the light receiving elements 211 is configured to include a photodiode (PD). Each light receiving element 211 may include a PD peripheral circuit. Each light receiving element 211 receives an optical signal, converts the received optical signal into an electrical signal (reception signal), and outputs the reception signal to the corresponding receiver 212. Each of the receivers 212 may include a field programmable gate array (FPGA) and/or a system-on-a-chip (SoC). Each receiver 212 converts the reception signal output by the corresponding light receiving element 211, performs signal processing on the converted reception signal, and outputs the processed reception signal to the controller 230. At least a part of each receiver 212 may be integrated with another receiver 212. At least a part of each receiver 212 may be integrated with the transmitter 222. The light receiving element 211 and the corresponding receiver 212 constitute a light receiving unit that receives an optical signal under the control of the controller 230.

Each of the light emitting elements 221 is configured to include a laser diode (LD) or a light emitting diode (LED). In the present embodiment, each light emitting element 221 includes an LED. Each light emitting element 221 converts an electrical signal (transmission signal) output by the corresponding transmitter 222#0 for optical communication into an optical signal and transmits the optical signal. Each light emitting element 221 may include an LED peripheral circuit. Note that the LED can be configured at a lower cost than the LD, but has a lower light directivity than the LD. Specifically, the LD emits an optical signal in the form of a fine beam that has reciprocated many times in a resonator, whereas the LED emits an optical signal having a certain spread. Each of the transmitters 222 performs signal processing on a transmission signal output from the controller 230, converts the signal after the signal processing, and outputs the converted signal to the corresponding light emitting element 221. At least a part of each transmitter 222 may be integrated with another transmitter 222. At least a part of each transmitter 222 may be integrated with the receiver 212. The light emitting element 221 and the corresponding transmitter 222 constitute a light emitting unit that transmits an optical signal under the control of the controller 230.

The controller 230 controls an overall operation of the base station apparatus 200. The operations of the base station apparatus 200 described above and below may be operations performed under the control of the controller 230. For example, the controller 230 controls the optical communicator 201. The controller 230 includes at least one processor 231 and at least one memory 232. The memory 232 stores a program to be executed by the processor 231 and information to be used for processing by the processor 231. The processor 231 may include a digital signal processor and a Central Processing Unit (CPU). The digital signal processor performs modulation and demodulation, coding and decoding, and the like on digital signals. The CPU executes the program stored in the memory and performs various types of processing. At least a part of the controller 230 may be integrated with the receiver 212. At least a part of the controller 230 may be integrated with the transmitter 222.

The backhaul communicator 240 performs backhaul communication (wired communication and/or wireless communication) via a backhaul line under the control of the controller 230. The backhaul communicator 240 may include a network communicator 241 that performs communication with the network 10, and an inter-base station communicator 242 that performs inter-base station communication with another base station. For example, the network communicator 241 receives data to be transmitted to the terminal apparatus 100 from the network 10, and outputs the received data to the controller 230. The network communicator 241 transmits the data received by the optical communicator 201 from the terminal apparatus 100 to the network 10. For example, the inter-base station communicator 242 transmits and receives control data for performing cooperative control with another base station to and from the other base station.

In the base station apparatus 200 configured as described above, the optical communicator 201 includes a plurality of light receiving elements 211 and a plurality of light emitting elements 221 and has a configuration supporting optical communication of a plurality of colors. The controller 230 controls the optical communicator 201 to perform, by using the TDD scheme, reception (UL) of an optical signal from the terminal apparatus 100 and transmission (DL) of an optical signal to the terminal apparatus 100 in a time division manner. The controller 230 controls the optical communicator 201 to use an identical color selected from among the plurality of colors for the reception (UL) and the transmission (DL) of the optical signal.

Furthermore, the controller 230 controls the optical communicator 201 such that the light emitting element 221 close to the light receiving element 211 that receives the optical signal (UL optical signal) from the terminal apparatus 100 transmits the optical signal (DL optical signal) to the terminal apparatus 100. Here, the controller 230 estimates a propagation path state based on the optical signal (UL optical signal) received by the light receiving element 211 from the terminal apparatus 100, and controls transmission of the optical signal (DL optical signal) from the light emitting element 221 to the terminal apparatus 100 based on the estimated propagation path state.

### (1.2.2) Configuration Example of Terminal Apparatus

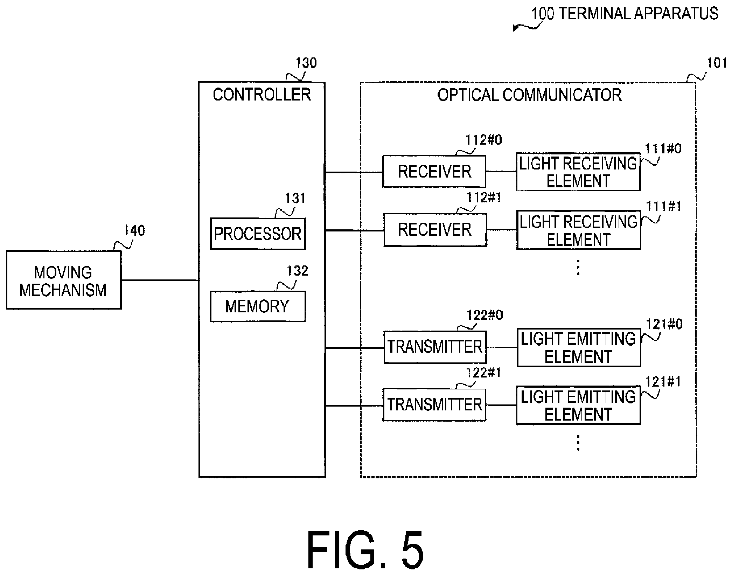

FIG. 5 is a diagram illustrating a configuration example of the terminal apparatus 100 according to the present embodiment. The terminal apparatus 100 includes an optical communicator 101, a controller 130, and a moving mechanism 140. The terminal apparatus 100 may include a battery for supplying electrical power necessary for the terminal apparatus 100 to operate. The terminal apparatus 100 may include a sensor such as an image sensor and generate sensor data. The optical communicator 101 is connected to the controller 130 via a cable, and may be configured separately from the controller 130.

The optical communicator 101 performs optical communication (visible light communication in the present embodiment) with the base station apparatus 200 under the control of the controller 130. The optical communicator 101 has a configuration supporting optical communication of a plurality of colors. In other words, the optical communicator 101 has a function of transmitting and receiving optical signals of a plurality of colors. A specific example of the configuration will be described later. In the present embodiment, the optical communicator 101 includes a plurality of light receiving elements 111 (111#0, 111#1, ...), a plurality of receivers 112 (112#0, 112#1, ...), a plurality of light emitting elements 121 (121#0, 121#1, ...), and a plurality of transmitters 122 (122#0, 122#1, ...).

Each of the light receiving elements 111 is configured to include a photodiode (PD). Each light receiving element 111 may include a PD peripheral circuit. Each light receiving element 111 receives an optical signal, converts the received optical signal into an electrical signal (reception signal), and outputs the reception signal to the corresponding receiver 112. Each of the receivers 112 may include an FPGA and/or an SoC. Each receiver 112 converts the reception signal output by the corresponding light receiving element 111, performs signal processing on the converted reception signal, and outputs the processed reception signal to the controller 130. At least a part of each receiver 112 may be integrated with another receiver 112. At least a part of each receiver 112 may be integrated with the transmitter 122. The light receiving element 111 and the corresponding receiver 112 constitute a light receiving unit that receives an optical signal under the control of the controller 130.

Each light emitting element 121 is configured to include a laser diode (LD) or a light emitting diode (LED). In the present embodiment, each light emitting element 121 is configured to include an LED. Each light emitting element 121 converts an electrical signal (transmission signal) output by the corresponding transmitter 122#0 for optical communication into an optical signal and transmits the optical signal. Each light emitting element 121 may include an LED peripheral circuit. Each of the transmitters 122 performs signal processing on a transmission signal output from the controller 130, converts the signal after the signal processing, and outputs the converted signal to the corresponding light emitting element 121. At least a part of each transmitter 122 may be integrated with another transmitter 122. At least a part of each transmitter 122 may be integrated with the receiver 112. The light emitting element 121 and the corresponding transmitter 122 constitute a light emitting unit that transmits an optical signal under the control of the controller 130.

The controller 130 controls an overall operation of the terminal apparatus 100. The operations of the terminal apparatus 100 described above and below may be operations performed under the control of the controller 130. For example, the controller 130 controls the optical communicator 101. The controller 130 includes at least one processor 131 and at least one memory 132. The memory 132 stores a program to be executed by the processor 131 and information to be used for processing by the processor 131. The processor 131 may include a digital signal processor and a Central Processing Unit (CPU). The digital signal processor performs modulation and demodulation, coding and decoding, and the like on digital signals. The CPU executes the program stored in the memory and performs various types of processing. At least a part of the controller 130 may be integrated with the receiver 112. At least a part of the controller 130 may be integrated with the transmitter 122.

The moving mechanism 140 moves the terminal apparatus 100 under the control of the controller 130. The moving mechanism 140 includes, for example, a motor and a screw coupled to a rotation shaft of the motor.

In the terminal apparatus 100 configured as described above, the optical communicator 101 includes a plurality of light receiving elements 111 and a plurality of light emitting elements 121 and has a configuration supporting optical communication of a plurality of colors. The controller 130 performs reception (DL) of an optical signal from the base station apparatus 200 and transmission (UL) of an optical signal to the base station apparatus 200 in a time division manner by the TDD scheme. The controller 130 uses the identical color selected from among the plurality of colors for reception (DL) and transmission (UL) of the optical signal.

Furthermore, the controller 130 controls the optical communicator 101 such that the light emitting element 121 close to the light receiving element 111 that receives the optical signal (DL optical signal) from the base station apparatus 200 transmits the optical signal (UL optical signal) to the base station apparatus 200. Here, the controller 130 estimates a propagation path state based on the optical signal (DL optical signal) received by the light receiving element 111 from the base station apparatus 200, and controls transmission of the optical signal (UL optical signal) from the light emitting element 121 to the base station apparatus 200 based on the estimated propagation path state.

### (1.3) Configuration Examples of Communication Frame

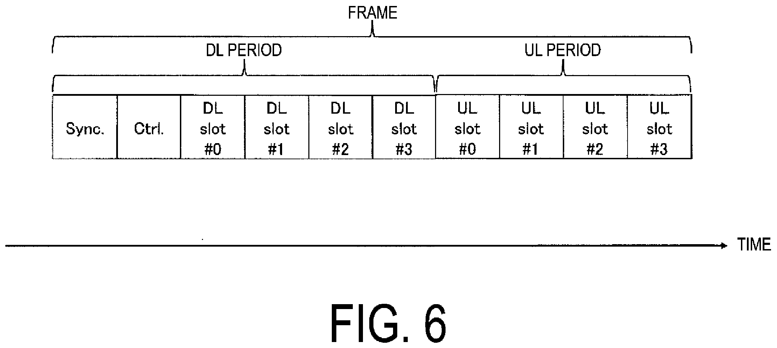

With reference to FIG. 6, 1 configuration example of a communication frame used in the optical communication system 1 according to the present embodiment will be described.

Although one communication frame includes 10 time slots in the illustrated example, the number of time slots included in one communication frame is not limited to 10. Note that each of the time slots includes the predetermined number of symbol sections.

In this frame configuration example, the communication frame is a TDD frame, and includes a DL period and a UL period. A guard time may be provided between the DL period and the UL period. The DL period includes one synchronization slot (Sync.), one control slot (Ctrl.), and four DL slots (DL slots) #0 to #3. The UL period includes four UL slots #0 to #3.

The synchronization slot (Sync.) is a time slot in which the base station apparatus 200 transmits a pilot optical signal such as a synchronization optical signal. The terminal apparatus 100 identifies the base station apparatus 200 based on the pilot optical signal received from the base station apparatus 200, and establishes synchronization with the base station 200 by using the pilot optical signal.

The control slot (Ctrl.) is a time slot in which the base station apparatus 200 transmits a control optical signal. The control optical signal may be transmitted in broadcast from the base station apparatus 200. The control optical signal may include, for example, information indicating resource allocations (time slot allocations) and/or color assignments for DL and UL.

The base station apparatus 200 allocates each of the DL slots #0 to #3 to one or more terminal apparatuses 100. The base station apparatus 200 transmits a DL data optical signal in each DL slot. A light emitting element-specific reference signal (Ref.TxElement) and a data optical signal may be arranged in each DL slot in a time division manner. The base station apparatus 200 allocates each of the UL slots #0 to #3 to one or more terminal apparatuses 100. The transmission signal 100 transmits a UL data optical signal in the assigned UL slot.

Note that the base station apparatus 200 can simultaneously perform optical communications with a plurality of terminal apparatuses 100 located in different directions. Specifically, the base station apparatus 200 can multiplex a plurality of terminal apparatuses 100 located in different directions by spatial division. The base station apparatus 200 can multiplex a plurality of terminal apparatuses 100 by frequency division by assigning different colors to the terminal apparatuses 100. Therefore, the base station apparatus 200 may allocate one DL slot or one UL slot to a plurality of terminal apparatuses 100.

### (1.4) Configuration Example of Optical Communicator Corresponding to a Plurality of Colors

In the present embodiment, a configuration example of the optical communicator corresponding to a plurality of colors is described. Here, a configuration example of the optical communicator 101 is mainly described using the terminal apparatus 100 as an example of the optical communication apparatus, but the optical communicator 201 of the base station apparatus 200 also has a configuration same as and/or similar to the optical communicator 101 of the terminal apparatus 100.

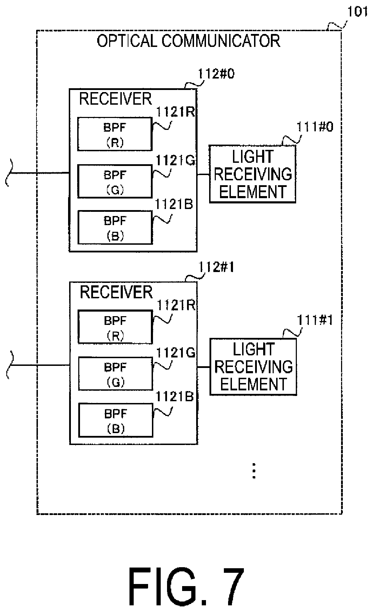

FIG. 7 is a diagram illustrating a first configuration example of a reception system in the optical communicator 101 corresponding to a plurality of colors.

In this configuration example, the optical communicator 101 shares one light receiving element 111 between a plurality of colors. Specifically, each receiver 112 of the optical communicator 101 includes a bandpass filter (BPF) 1121 that separates the reception signal of the corresponding light receiving element 111 for each color. In the illustrated example, each receiver 112 includes a bandpass filter 1121B for blue, a bandpass filter 1121G for green, and a bandpass filter 1121R for red. Each bandpass filter 1121 extracts the reception signal of a corresponding color component from the reception signal of the light receiving element 111, and outputs the extracted reception signal.

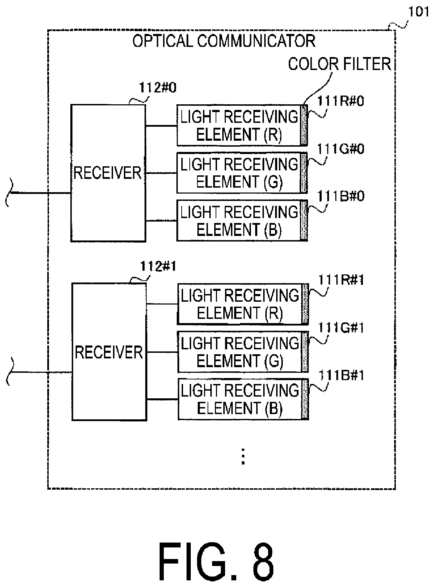

FIG. 8 is a diagram illustrating a second configuration example of the reception system in the optical communicator 101 corresponding to a plurality of colors.

In this configuration example, the optical communicator 101 includes the light receiving element 111 provided for each color. Specifically, the optical communicator 101 includes a plurality of light receiving elements 111 each provided with a color filter of each color. In the illustrated example, the plurality of light receiving elements 111 corresponding to each receiver 112 include a light receiving element 111B for blue, a light receiving element 111G for green, and a light receiving element 111R for red. The respective light receiving elements 111 are connected to the corresponding receiver 112.

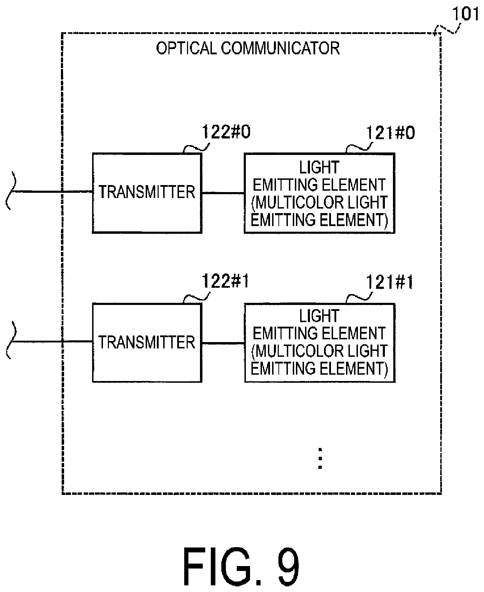

FIG. 9 is a diagram illustrating a first configuration example of a transmission system in the optical communicator 101 corresponding to a plurality of colors.

In this configuration example, the optical communicator 101 shares one light emitting element 121 between a plurality of colors. Specifically, each light emitting element 121 of the optical communicator 101 includes a multicolor light emitting element. The multicolor light emitting element includes three LEDs of red, green, and blue (RGB) mounted in one transparent resin housing, and includes pins (terminals) for the respective colors. The transmitter 122 can switch an emission color of the multicolor light emitting element by supplying a drive signal to one of the pins of the multicolor light emitting element.

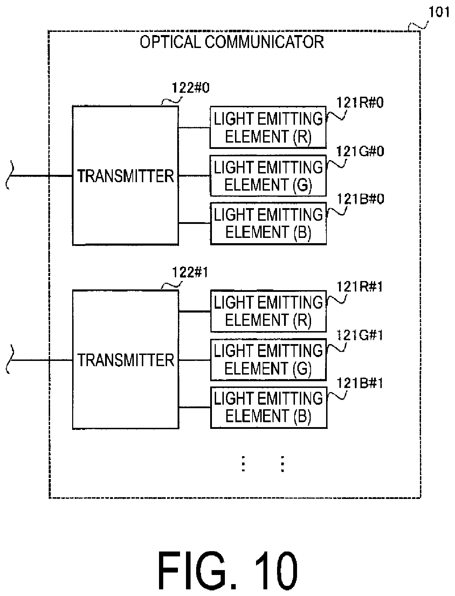

FIG. 10 is a diagram illustrating a second configuration example of the transmission system in the optical communicator 101 corresponding to a plurality of colors.

In this configuration example, the optical communicator 101 includes the light emitting element 121 provided for each color. In the illustrated example, the plurality of light emitting elements 121 corresponding to each receiver 122 include a light emitting element 121B for blue, a light emitting element 121G for green, and a light emitting element 121R for red. The respective light emitting elements 121 are connected to the corresponding transmitter 122.

### (1.5) Arrangement Example Of Light Receiving Elements and Light Emitting Elements

In the present embodiment, an arrangement example of the light receiving elements 111 and the light emitting elements 121 in the optical communicator 101 is described. Here, the arrangement example of the light receiving elements 111 and the light emitting elements 121 of the optical communicator 101 is mainly described using the terminal apparatus 100 as an example of the optical communication apparatus, but the optical communicator 201 of the base station apparatus 200 also has a configuration same as and/or similar to the optical communicator 101 of the terminal apparatus 100. The controller 230 of the base station apparatus 200 performs control the same as and/or similar to the controller 130 of the terminal apparatus 100.

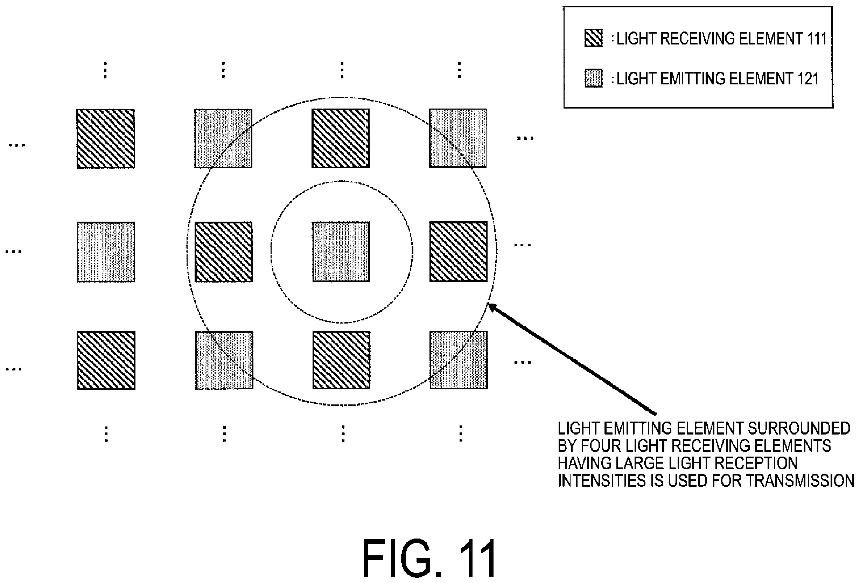

FIG. 11 is a diagram illustrating a first arrangement example of the light receiving elements 111 and the light emitting elements 121 according to the present embodiment.

In this arrangement example, the plurality of light receiving elements 111 and the plurality of light emitting elements 121 are arranged in a two dimensional array along a curved surface of the optical communication apparatus (in this example, the terminal apparatus 100). Note that each of the light receiving elements 111 and each of the light emitting elements 121 may not need to be exposed on the curved surface of the terminal apparatus 100. Each light receiving element 111 and each light emitting element 121 may be housed in a hemispherical or spherical transparent housing. In the illustrated example, the plurality of light receiving elements 111 and the plurality of light emitting elements 121 are arranged in a lattice pattern. Since the surface of the terminal apparatus 100 is not planar but spherical, the elements are not arranged in a perfect lattice pattern, but are arranged by reducing the interval between the elements and/or thinning out the elements.

In this arrangement example, one light receiving element 111 and one light emitting element 121 are alternately arranged in a vertical direction and a horizontal direction of the two dimensional array. However, two light receiving elements 111 may be continuously arranged, or two light emitting elements 121 may be continuously arranged in the vertical direction or the horizontal direction of the two dimensional array.

The controller 130 of the terminal apparatus 100 controls the optical communicator 101 and thus causes the light emitting element 121 surrounded by the plurality of light receiving elements 111 configured to receive an optical signal from the base station apparatus 200 at a predetermined light reception intensity or higher to transmit an optical signal to the base station apparatus 200. In the illustrated example, one light receiving element 111 and one light emitting element 121 are alternately arranged in the vertical direction and the horizontal direction of the two dimensional array. Therefore, each light emitting element 121 is surrounded by a light receiving element set consisting of four light receiving elements 111 on the upper, lower, left, and right sides of the light emitting element 121 itself. Such an element group consisting of one light emitting element 121 and four light receiving elements 111 on the upper, lower, left, and right sides thereof may be one type of a cluster described later.

In this arrangement example, the controller 130 of the terminal apparatus 100 uses, for transmission, the light emitting element 121 surrounded by the light receiving element set (four light receiving elements 111) having large light reception intensities. For example, after measuring the light reception intensities in all the light receiving elements 111, the controller 130 calculates the total value of the light reception intensities for each light receiving element set, specifies a light receiving element set having the largest total value, and uses the light emitting element 121 at the center surrounded by the specified light receiving element set for transmission of the optical signal.

The controller 130 of the terminal apparatus 100 estimates a propagation path state (for example, a DL propagation loss) based on an optical signal received by the specified light receiving element set from the base station apparatus 200. Then, the controller 130 controls transmission of the optical signal from the light emitting element 121 (transmission light emission at the center) to the base station apparatus 200 based on the estimated propagation path state. For example, the controller 130 estimates the propagation losses of four light receiving elements 111 constituting the specified light receiving element set, obtains an average value of these propagation losses, and approximates the propagation loss from the light emitting element 121 (transmission light emitting element) at the center to another optical communication apparatus (base station apparatus 200). Note that examples of the transmission control of the optical signal include, for example, control of transmission output (light emission intensity) of optical communication and/or selection of a modulation coding scheme of optical communication.

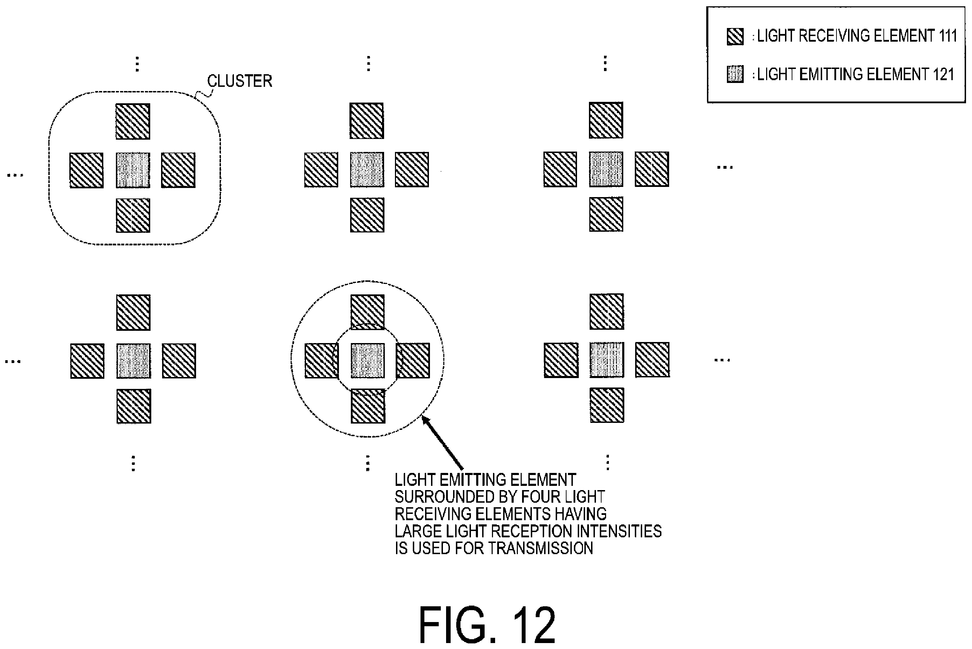

FIG. 12 is a diagram illustrating a second arrangement example of the light receiving elements 111 and the light emitting elements 121 according to the present embodiment.

In this arrangement example, the plurality of light receiving elements 111 and the plurality of light emitting elements 121 constitute a plurality of clusters arranged on the curved surface of the optical communication apparatus (terminal apparatus 100). Each of the clusters is spaced apart from the other clusters. In each cluster, two or more light receiving elements 111 are arranged close to one or more light emitting elements 121 such that the two or more light receiving elements 111 surround the one or more light emitting elements 121. Note that each of the light receiving elements 111 and each of the light emitting elements 121 may not need to be exposed on the curved surface of the terminal apparatus 100. Each light receiving element 111 and each light emitting element 121 may be housed in a hemispherical or spherical transparent housing.

In the illustrated example, an element group consisting of one light emitting element 121 and four light receiving elements 111 on the upper, lower, left, and right sides thereof constitutes one cluster. However, the number of light receiving elements 111 included in one cluster is not limited to four, and may be one or more. The number of light emitting elements 121 included in one cluster is not limited to one, and may be two or more.

In this arrangement example, the controller 130 of the terminal apparatus 100 uses, for transmission, the light emitting element 121 in the cluster with four light receiving elements 111 having large light reception intensities. In other words, the controller 130 controls the optical communicator 101 and thus causes the light emitting element 121 surrounded by the plurality of light receiving elements 111 configured to receive an optical signal from the base station apparatus 200 at a predetermined light reception intensity or higher to transmit an optical signal to the base station apparatus 200. For example, after measuring the light reception intensities in all the light receiving elements 111, the controller 130 calculates the total value of the light reception intensities for each cluster, specifies a cluster having the largest total value, and uses the light emitting element 121 in the specified cluster for transmission of the optical signal.

The controller 130 of the terminal apparatus 100 estimates a propagation path state (for example, a DL propagation loss) based on optical signals received by four light receiving elements 111 in the one cluster from the base station apparatus 200. The controller 130 controls transmission of the optical signal from the light emitting element 121 in the one cluster to the base station apparatus 200 based on the estimated propagation path state.

In this arrangement example, in each of the plurality of clusters, the light receiving elements 111 and the light emitting elements 121 in the cluster are arranged on an identical plane such that the optical axes of the light receiving elements 111 and the light emitting element 121 are directed in the same direction. In other words, although the optical communication apparatus has a hemispherical shape as a whole, the light receiving elements 111 and the light emitting element 121 in one cluster are arranged on the identical plane. As a result, the optical communication apparatus has a polyhedral shape in which each plane has a cluster. Thus, the directivity of the light receiving element 111 and the directivity of the light emitting element 121 in the same cluster can be aligned.

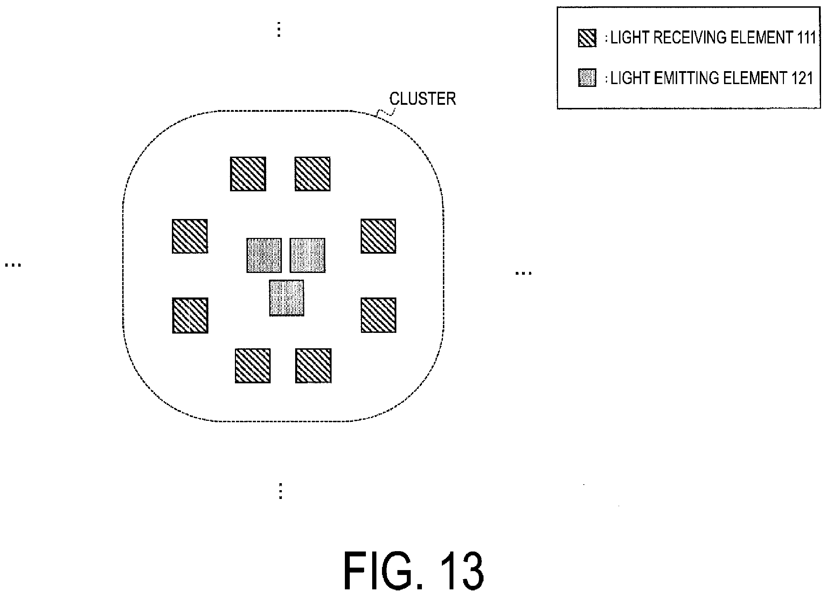

FIG. 13 is a diagram illustrating a third arrangement example of the light receiving elements 111 and the light emitting elements 121 according to the present embodiment.

This arrangement example is a cluster arrangement same as and/or similar to the second arrangement example described above, but the configuration in each cluster is different from that of the second arrangement example described above. In each cluster, eight light receiving elements 111 are arranged close to three light emitting elements 121 such that the eight light receiving elements 111 surround the three light emitting elements 121. The three light emitting elements 121 may be provided for colors of red, green, and blue (RGB), respectively. Each of the three light emitting elements 121 may be configured to include a multicolor LED corresponding to red, green, and blue (RGB).

The control using the cluster is the same as and/or similar to the second arrangement example described above. The controller 130 of the terminal apparatus 100 may perform propagation path estimation on all the light receiving elements 111 in the cluster and control the optical communicator 101 to perform simultaneous transmission in all the light emitting elements 121 in the cluster. In the simultaneous transmission, identical optical signals are transmitted from the plurality of light emitting elements 121. Such simultaneous transmission can realize an improvement in resistance to movement and an improvement in S/N by power combining.

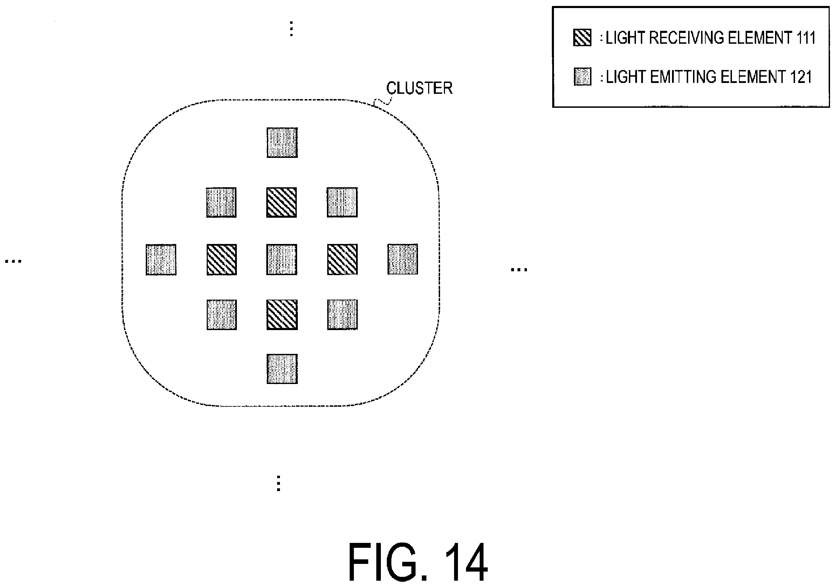

FIG. 14 is a diagram illustrating a fourth arrangement example of the light receiving elements 111 and the light emitting elements 121 according to the present embodiment.

This arrangement example is a cluster arrangement same as and/or similar to the second and third arrangement examples described above, but the configuration in each cluster is different from that of the second and third arrangement examples described above, where the elements are arranged in a lattice pattern. In the illustrated example, in each cluster, four light receiving elements 111 are arranged on the upper, lower, left, and right sides of one light emitting element 121 at the center, and eight light emitting elements 121 are arranged to surround the four light receiving elements 111. The control using the cluster is the same as and/or similar to the third arrangement example described above.

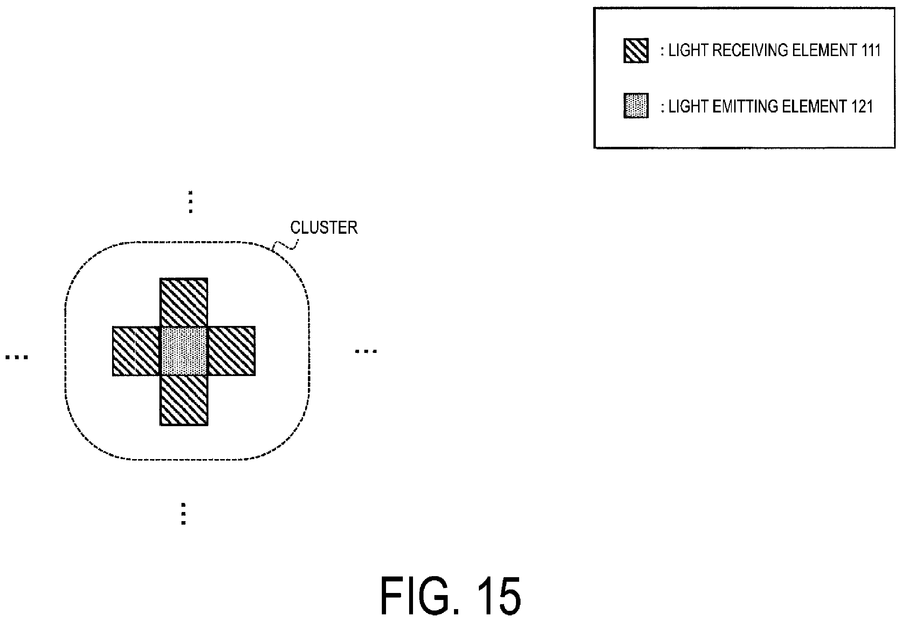

In the first to fourth arrangement examples described above, in the TDD, since the influence of the wraparound from the light emitting element 121 to the light receiving element 111 in the optical communication apparatus can be ignored, the light receiving element 111 and the light emitting element 121 can be close to each other as much as possible, for example, as in the arrangement example illustrated in FIG. 15. For example, in the optical communication apparatus, the light receiving element 111 and the light emitting element 121 constituting a pair consisting of the light receiving element 111 and the light emitting element 121 next to each other may be adjacently arranged without a light shielding member (e.g., light shade wall) being provided between the pair.

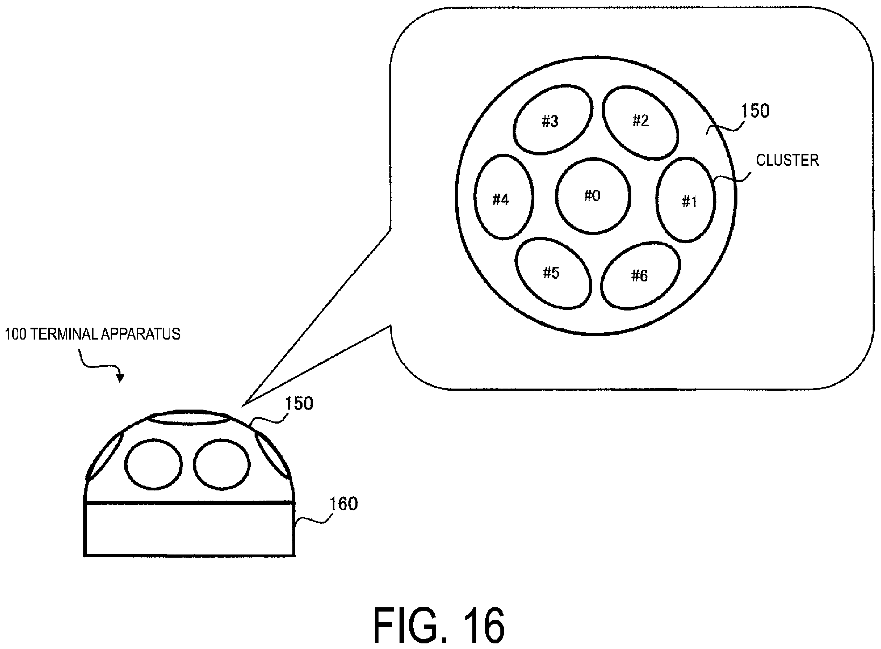

FIG. 16 is a diagram illustrating an outer appearance configuration example of the terminal apparatus 100 to which the cluster arrangement is applied according to the present embodiment.

In the illustrated example, the terminal apparatus 100 includes a hemispherical transparent housing 150 and a body part 160 coupled to the transparent housing 150. However, the terminal apparatus 100 may be formed into a spherical shape as a whole. The transparent housing 150 accommodates a plurality of clusters (seven clusters #0 to #6 in the illustrated example) arranged in a distributed manner. Each cluster is provided with a set of at least one light receiving element 111 and at least one light emitting element 121. The light receiving element 111 and the light emitting element 121 included in each cluster are arranged on an identical plane such that the optical axes these elements are directed in the same direction. With such a configuration, the terminal apparatus 100 can perform optical communication with base station apparatuses 200 in various directions.

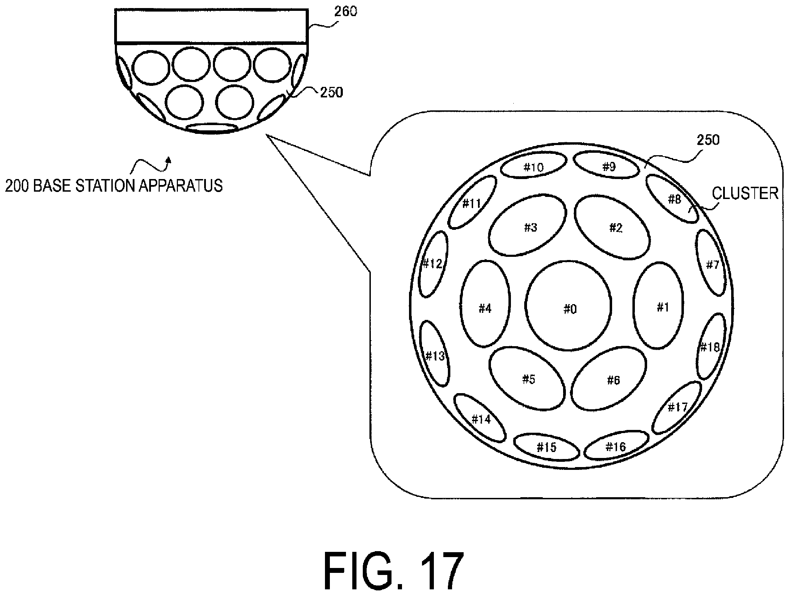

FIG. 17 is a diagram illustrating an outer appearance configuration example of the base station apparatus 200 to which the cluster arrangement is applied according to the present embodiment.

In the illustrated example, the base station apparatus 200 includes a hemispherical transparent housing 250 and a body part 260 coupled to the transparent housing 250. However, the base station apparatus 200 may be formed into a spherical shape as a whole. The transparent housing 250 accommodates a plurality of clusters (19 clusters #0 to #18 in the illustrated example) arranged in a distributed manner. Each cluster is provided with a set of at least one light receiving element 211 and at least one light emitting element 221. The light receiving element 211 and the light emitting element 221 included in each cluster are arranged on an identical plane such that the optical axes these elements are directed in the same direction. With such a configuration, the base station apparatus 200 can perform optical communication with the terminal apparatuses 100 in various directions.

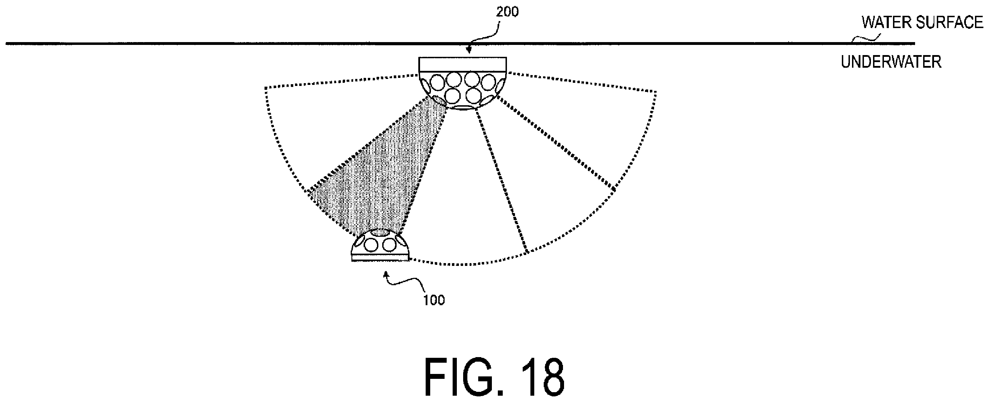

FIG. 18 is a diagram illustrating an example of optical communication between the base station apparatus 200 and the terminal apparatus 100 to each of which the cluster arrangement is applied according to the present embodiment.

The base station apparatus 200 forms a communicable range in which each cluster can communicate. The communicable range of each cluster is indicated by a broken line. The base station apparatus 200 performs optical communication with the terminal apparatus 100 using the cluster corresponding to the direction of the terminal apparatus 100. Similarly, the terminal apparatus 100 performs optical communication with the base station apparatus 200 using the cluster corresponding to the direction of the base station apparatus 200.

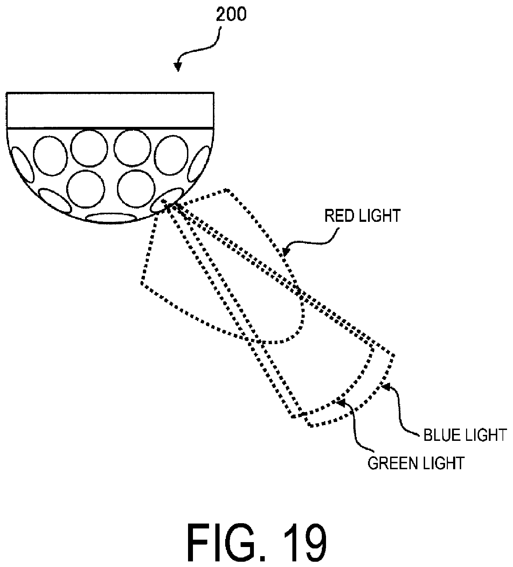

FIG. 19 is a diagram illustrating a transmission example of optical signals of a plurality of colors of the base station apparatus 200 to which the cluster arrangement is applied according to the present embodiment.

The base station apparatus 200 may be capable of transmitting optical signals of a plurality of colors in each cluster of the base station apparatus 200. In the illustrated example, the base station apparatus 200 transmits an optical signal of each of red, green, and blue (RGB) colors in one cluster. Similarly, the terminal apparatus 100 may be also capable of transmitting optical signals of a plurality of colors in each cluster of the terminal apparatus 100.

### (2) Second Embodiment

Differences between a second embodiment and the first embodiment described above will be mainly described. In the second embodiment, a configuration of the optical communication apparatus is the same as and/or similar to that in the first embodiment described above.

The first embodiment above describes one example in which an appropriate color is assigned to the terminal apparatus 100 based on a distance between the terminal apparatus 100 and the base station apparatus 200. However, depending on turbidity and/or plankton concentration underwater, red (and yellow) may have better propagation characteristics than blue and green. Therefore, in the present embodiment, a color having a high light reception intensity actually measured by the terminal apparatus 100 is basically assigned to the terminal apparatus 100. In the TDD, by using the reversibility of the propagation path, a color having good propagation characteristics in the DL can be regarded as having good propagation characteristics even in the UL.

However, a color to be preferably used for optical communication is not a color optimal for each terminal apparatus 100 but is a color optimal in the cell of the base station apparatus 200 in consideration of an interference and/or a communication load. Use of a specific color for optical communication by a number of terminal apparatuses 100 causes a bias toward the specific color, which is not preferable from the viewpoint of throughput improvement.

The present embodiment descries an operation of appropriately selecting a color to be used for optical communication to enhance the throughput improvement effect of the optical communication system 1.

In the present embodiment, the base station apparatus 200 transmits pilot optical signals of a plurality of colors. The terminal apparatus 100 and/or the base station apparatus 200 selects a color to be used for optical communication between the base station apparatus 200 and the terminal apparatus 100 from among a plurality of colors based on the light reception intensity of the pilot optical signal of each color received by the terminal apparatus 100 from the base station apparatus 200.

### (2.1) Establishment Operation for Optical Communication Connection

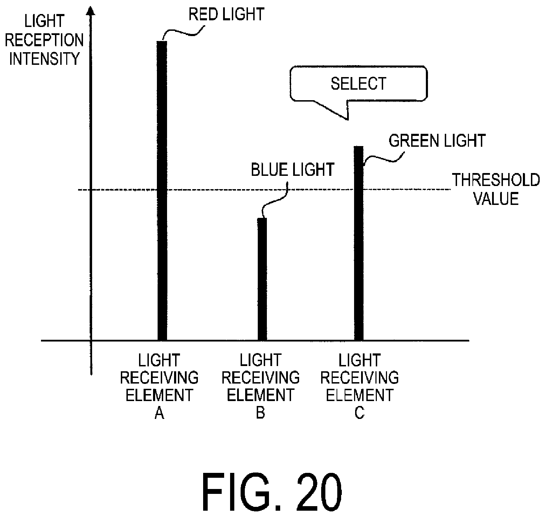

FIG. 20 is a diagram for explaining an establishment operation for an optical communication connection according to the present embodiment.

The terminal apparatus 100 that measures the light reception intensity of the pilot optical signal of each color from the base station apparatus 200 specifies a color having the light reception intensity that is equal to or greater than a threshold and is the lowest. Then, the terminal apparatus 100 establishes an optical communication connection to base station apparatus 200 by transmitting an optical signal of the specified color (for example, a connection request optical signal) to the base station apparatus 200. In the illustrated example, although the light reception intensity of red light is the highest, the terminal apparatus 100 selects green light having a light reception intensity which is equal to or greater than the threshold and is the lowest and starts optical communication with the base station apparatus 200.

This allows the terminal apparatus 100 not to have a biased specific color and allows the communication resource of each color to be efficiently used.

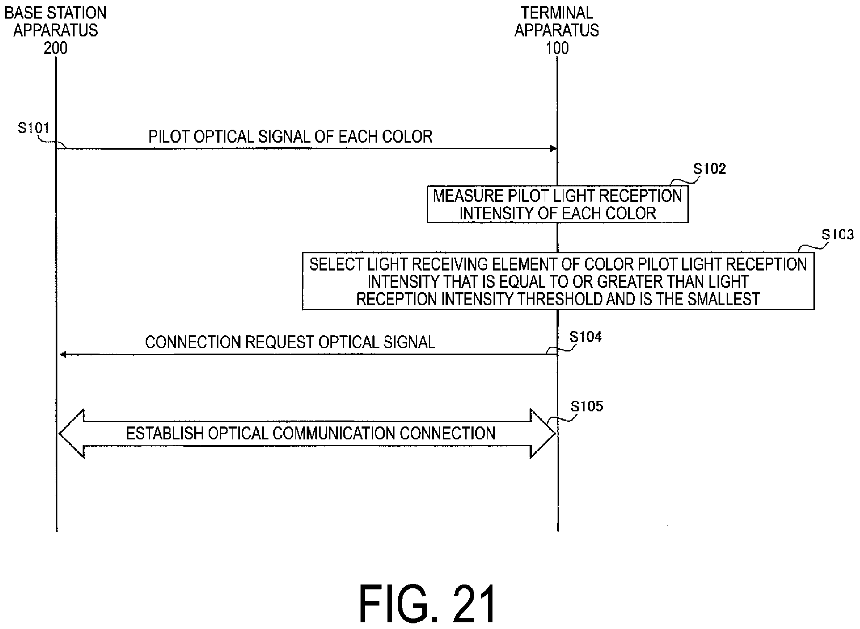

FIG. 21 is a diagram illustrating an example of an establishment operation sequence for the optical communication connection according to the present embodiment.

In step S101, the base station apparatus 200 transmits pilot optical signals of all colors in all directions the base station apparatus 200 can support. For example, the base station apparatus 200 transmits pilot optical signals from all the light emitting elements 221 of the base station apparatus 200. The terminal apparatus 100 receives (monitors) the pilot optical signal of each color.

In step S102, the terminal apparatus 100 measures a light reception intensity of the pilot optical signal of each color.

In step S103, the terminal apparatus 100 selects a color having the smallest light reception intensity from among the colors having the light reception intensities measured in step S102 equal to or greater than the threshold. For example, the terminal apparatus 100 selects the light receiving element 111 of a color having the light reception intensity that is equal to or greater than the threshold and is the smallest.

Note that prior to step S103, the terminal apparatus 100 may receive a control optical signal which is broadcast from base station apparatus 200 and includes the threshold common to a plurality of colors or the threshold individual for each color. The terminal apparatus 100 may compare the light reception intensity measured in step S102 with the threshold received from the base station apparatus 200.

In step S104, the terminal apparatus 100 accesses the base station apparatus 200 by transmitting a connection request optical signal from the light emitting element 121 of the color selected in step S103 to the base station apparatus 200, and attempts to establish an optical communication connection to the base station apparatus 200. For example, the terminal apparatus 100 transmits the connection request optical signal to the base station apparatus 200 by the light emitting element 121 of the selected color which is close to the light receiving element 111 selected in step S103.

In step S105, the terminal apparatus 100 establishes the optical communication connection to the base station apparatus 200. Here, the optical communication connection may be established by the base station apparatus 200 transmitting an acknowledgment optical signal to the terminal apparatus 100 in response to the connection request optical signal in step S104. The terminal apparatus 100 and the base station apparatus 200 use, for optical communication, the color used by the terminal apparatus 100 at the time of access.

### (2.2) Operation Example of Changing and/or Adding Color During Optical Communication

During the optical communication after establishing the optical communication connection, the terminal apparatus 100 and the base station apparatus 200 can change and/or add a color to be used for the optical communication.

In other words, after establishing the optical communication connection between the base station apparatus 200 and the terminal apparatus 100, the terminal apparatus 100 and the base station apparatus 200 change and/or add the color to be used for the optical communication between the base station apparatus 200 and the terminal apparatus 100 based on the light reception intensity of the pilot optical signal of each color received by the terminal apparatus 100 from the base station apparatus 200.

### (2.2.1) Base Station Apparatus-Initiated Operation Example

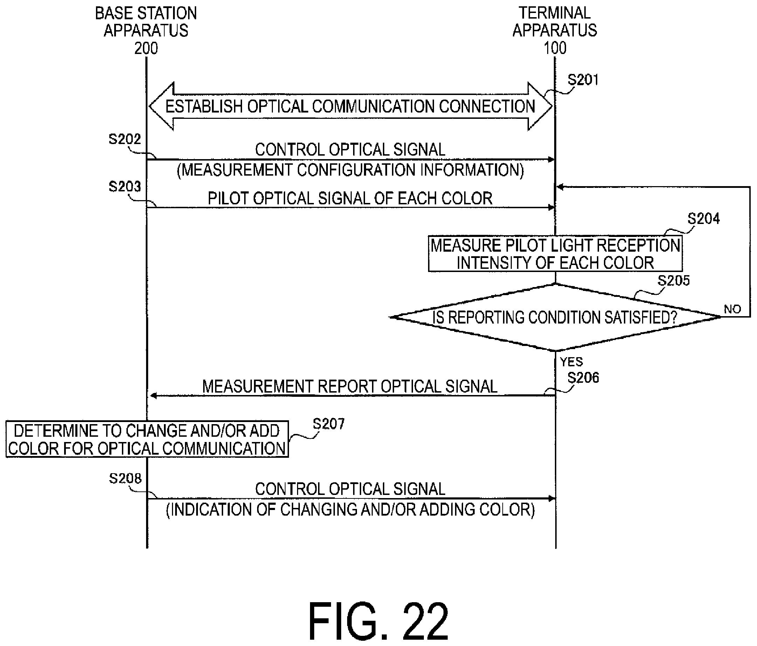

FIG. 22 is a diagram illustrating a base station apparatus-initiated operation example according to the present embodiment. In this operation example, after establishing the optical communication connection between the base station apparatus 200 and the terminal apparatus 100, the terminal apparatus 100 reports the light reception intensity of the pilot optical signal received by the terminal apparatus 100 from the base station apparatus 200 to the base station apparatus 200 periodically or when a predetermined threshold condition is satisfied. The predetermined threshold condition includes a first condition that the light reception intensity for a communication color (a color used for optical communication) is equal to or less than the threshold and/or a second condition that the light reception intensity for a non-communication color (a color not used for optical communication) is equal to or more than the threshold. The predetermined threshold condition may further include a third condition that a state in which the first condition and/or the second condition is satisfied has continued for a certain period of time.

In the illustrated example, in step S201, the terminal apparatus 100 establishes an optical communication connection to the base station apparatus 200.

In step S202, the base station apparatus 200 transmits a control optical signal including configuration information configuring a measurement and a measurement report to the terminal apparatus 100. The terminal apparatus 100 receives the control optical signal including the configuration information.

Here, the base station apparatus 200 may configure a reporting interval of the light reception intensity of the pilot optical signal for the terminal apparatus 100 in broadcast or individually. This enables the terminal apparatus 100 to periodically report the light reception intensity of the pilot optical signal to the base station apparatus 200.

The base station apparatus 200 may individually configure the light reception intensity threshold of the pilot optical signal of the color during the communication for the terminal apparatus 100. This enables the terminal apparatus 100 to report to the base station apparatus 200 the fact that the light reception intensity of the pilot optical signal of the color during the communication has become equal to or less than the threshold (in other words, the first condition has become satisfied).

The base station apparatus 200 may individually configure the light reception intensity threshold of the pilot optical signal of the color not during the communication for the terminal apparatus 100. This enables the terminal apparatus 100 to report to the base station apparatus 200 the fact that the light reception intensity of the pilot optical signal of the color not during the communication has become equal to or greater than the threshold (in other words, the second condition has become satisfied).

The base station apparatus 200 may configure the number of times of continuous measurement or a duration of the light reception intensity of the pilot optical signal to the terminal apparatus 100 in broadcast or individually. This can cause the base station apparatus 200 to enable the terminal apparatus 100 to report to the base station apparatus 200 the fact that the first condition and/or the second condition has been continuously satisfied the configured number of times or for the configured duration.

In step S203, the base station apparatus 200 transmits pilot optical signals of all colors in all directions the base station apparatus 200 can support. For example, the base station apparatus 200 transmits pilot optical signals from all the light emitting elements 221 of the base station apparatus 200. The terminal apparatus 100 receives (monitors) the pilot optical signal of each color.

In step S204, the terminal apparatus 100 measures a light reception intensity of the pilot optical signal of each color. In other words, terminal apparatus 100 periodically obtains the light reception intensity of the pilot optical signal for each color even after establishing a communication link (optical communication apparatus) with base station apparatus 200.

In step S205, the terminal apparatus 100 determines whether the reporting condition of the light reception intensity of the pilot optical signal is satisfied. When the reporting condition is not satisfied (NO in step S205), the process returns to step S203.

On the other hand, when the reporting condition is satisfied (YES in step S205), in step S206, the terminal apparatus 100 transmits a measurement report optical signal including the light reception intensity (measurement result) measured in step S204 to the base station apparatus 200. The base station apparatus 200 receives the measurement report optical signal. The measurement report optical signal may include a measurement result for each color. The measurement report optical signal may include information indicating the type of the reporting condition satisfied in step S205.

In step S207, the base station apparatus 200 determines to change and/or add a color to be used for optical communication with the terminal apparatus 100 based on the measurement report in step S206.

In step S208, the base station apparatus 200 transmits, to the terminal apparatus 100, a control optical signal including information indicating the changing and/or adding of the color determined in step S207. The terminal apparatus 100 receiving the control optical signal changes and/or adds the color to be used for optical communication with base station apparatus 200 in accordance with the indication from the base station apparatus 200. Specifically, when the changing of the color is indicated, the terminal apparatus 100 changes the current communication color to the communication color of the change indication. When the adding of the color is indicated, the terminal apparatus 100 adds another color to the optical communication with the base station apparatus 200 in addition to the current communication color.

Here, when a color to be used for optical communication is added, two or more colors are to be used for optical communication between the terminal apparatus 100 and the base station apparatus 200. In this case, the terminal apparatus 100 and the base station apparatus 200 may communicate identical data in each of the two or more colors. Accordingly, the data is given redundancy to improve the reliability, thereby improving communication quality. The terminal apparatus 100 and the base station apparatus 200 may communicate different data in each of the two or more colors. This can improve communication speed.

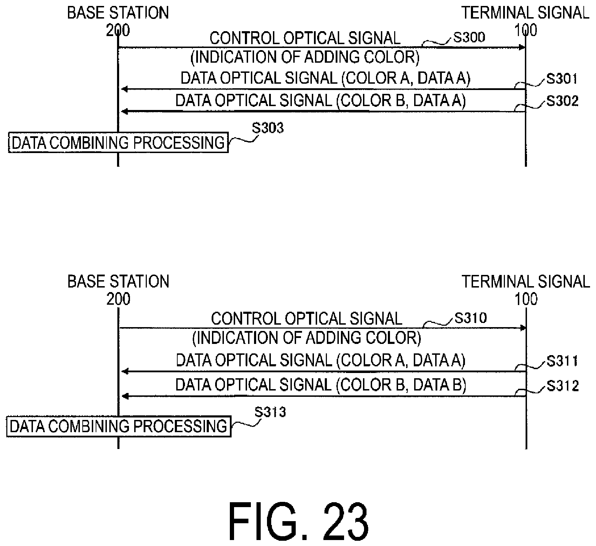

FIG. 23 is a diagram illustrating an operation example of UL communication using two colors according to the present embodiment. A sequence on the upper side in FIG. 23 illustrates an operation example in which identical data is communicated in each of two colors.

In step S300, the base station apparatus 200, when indicating adding a color to be used for optical communication with the terminal apparatus 100, indicates transmitting information, in a color different from an original color, the same as the information transmitted in the original color.

In steps S301 and S302, the terminal apparatus 100 transmits identical data (data A) in each of two colors (color A and color B) to the base station apparatus 200 in accordance with the indication from the base station apparatus 200.

In step S303, the base station apparatus 200 combines the data received in the respective colors in steps S301 and S302.

A sequence on the lower side in FIG. 23 illustrates an operation example in which different data is communicated in the respective two colors.

In step S310, the base station apparatus 200, when indicating adding a color to be used for optical communication with the terminal apparatus 100, indicates transmitting information, in a color different from an original color, different from the information transmitted in the original color.

In steps S311 and S312, the terminal apparatus 100 transmits different data (data A and data B) in respective two colors (color A and color B) to the base station apparatus 200 in accordance with the indication from the base station apparatus 200.

In step S313, the base station apparatus 200 combines the data received in the respective colors in steps S311 and S312.

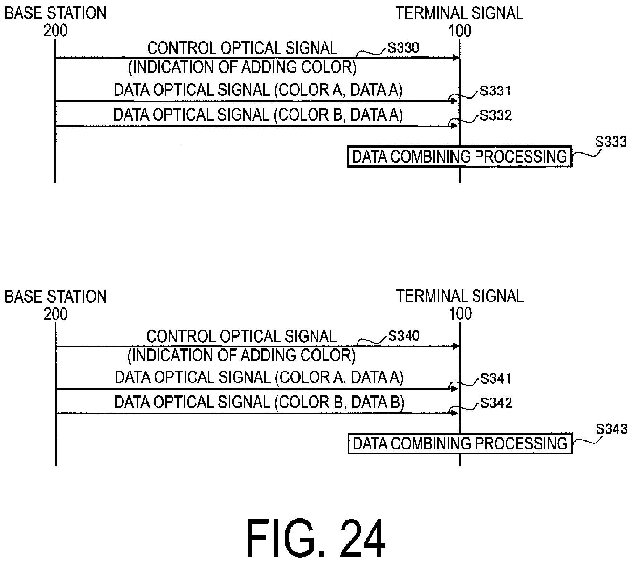

FIG. 24 is a diagram illustrating an operation example of DL communication using two colors. A sequence on the upper side in FIG. 24 illustrates an operation example in which identical data is communicated in each of two colors.

In step S330, the base station apparatus 200, when indicating adding a color to be used for optical communication with the terminal apparatus 100, transmits an indication of transmitting information, in a color different from an original color, the same as the information transmitted in the original color.

In steps S331 and S332, the base station apparatus 200 transmits identical data (data A) in each of two colors (color A and color B) to the transmission apparatus 100.

In step S333, the terminal apparatus 100 combines the data received in the respective colors in steps S331 and S332.

A sequence on the lower side in FIG. 24 illustrates an operation example in which different data is communicated in the respective two colors.

In step S340, the base station apparatus 200, when indicating adding a color to be used for optical communication with the terminal apparatus 100, transmits an indication of transmitting information, in a color different from an original color, different from the information transmitted in the original color.

In steps S341 and S342, the base station apparatus 200 transmits different data (data A and data B) in respective two colors (color A and color B) to the terminal apparatus 100.

In step S343, the terminal apparatus 100 combines the data received in the respective colors in steps S341 and S342.

### (2.2.2) Terminal Apparatus-Initiated Operation Example

The base station apparatus-initiated operation example describe above may be changed to a terminal apparatus-initiated operation example. For example, the base station apparatus 200 can give permission of changing and/or adding a color to be used for optical communication and conditions of the changing and/or the adding together to the terminal apparatus 100 in advance, and thereby, the changing and/or adding a color can be performed on the initiative of the terminal apparatus 100. In this operation example, when the light reception intensity of the pilot optical signal meets the color change condition and/or the color addition condition, the terminal apparatus 100 changes and/or adds the color to be used for the optical communication with the base station apparatus 200.

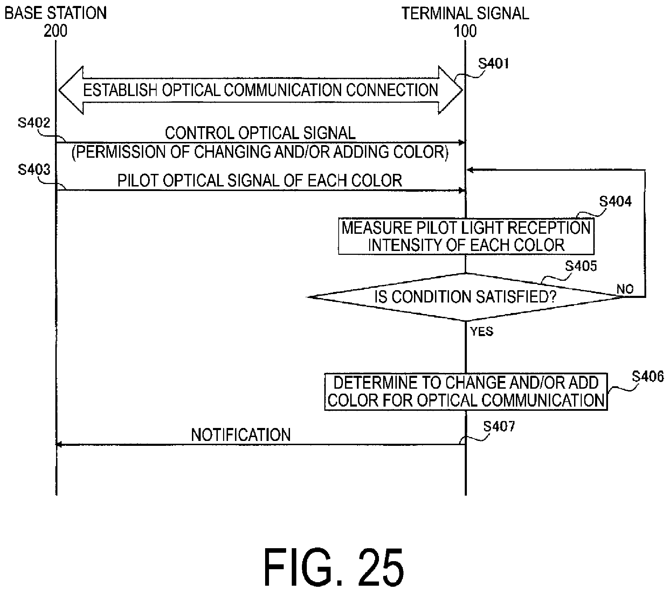

FIG. 25 is a diagram illustrating a terminal apparatus-initiated operation example according to the present embodiment.

In the illustrated example, in step S401, the terminal apparatus 100 establishes an optical communication connection to the base station apparatus 200.

In step S402, the base station apparatus 200 transmits, to the terminal apparatus 100, a control optical signal including information of permission of changing and/or adding a color to be used for optical communication and a condition of the changing and/or the adding. The terminal apparatus 100 receives the control optical signal including the information.

For example, the base station apparatus 200 may individually configure the light reception intensity threshold of the pilot optical signal of the color during the communication for the terminal apparatus 100. Here, when the light reception intensity of the pilot optical signal of the communication color becomes equal to or less than the threshold, the base station apparatus 200 may permit the terminal apparatus 100 to change and/or add the color to be used for the optical communication with the base station apparatus 200.

The base station apparatus 200 may individually configure the light reception intensity threshold of the pilot optical signal of the non-communication color for the terminal apparatus 100. Here, when the light reception intensity of the pilot optical signal of the non-communication color becomes equal to or greater than the threshold, the base station apparatus 200 may permit the terminal apparatus 100 to change and/or add the color to be used for the optical communication with the base station apparatus 200.

The base station apparatus 200 may configure the number of times of continuous measurement or a duration of the light reception intensity of the pilot optical signal to the terminal apparatus 100 in broadcast or individually. Here, when the condition is continuously satisfied the number of times or for the duration, the base station apparatus 200 may permit the terminal apparatus 100 to change and/or add the color to be used for the optical communication with the base station apparatus 200.

In step S403, the base station apparatus 200 transmits pilot optical signals of all colors in all directions the base station apparatus 200 can support. For example, the base station apparatus 200 transmits pilot optical signals from all the light emitting elements 221 of the base station apparatus 200. The terminal apparatus 100 receives (monitors) the pilot optical signal of each color.

In step S404, the terminal apparatus 100 measures a light reception intensity of the pilot optical signal of each color. In other words, terminal apparatus 100 periodically obtains the light reception intensity of the pilot optical signal for each color even after establishing a communication link (optical communication apparatus) with base station apparatus 200.

In step S405, the terminal apparatus 100 determines whether the condition of changing and/or adding a color is satisfied. When the condition is not satisfied (NO in step S405), the process returns to step S403.

On the other hand, when the condition is satisfied (YES in step S405), in step S406, the terminal apparatus 100 determines to change and/or add the color to be used for the optical communication with the base station apparatus 200.

In step S407, the terminal apparatus 100 transmits a notification signal notifying the base station 200 of the determination of step S406 to the base station apparatus 200. As a result, the terminal apparatus 100 and the base station apparatus 200 change and/or add a color to be used for optical communication. When a color to be used for optical communication is added, two or more colors are used for the optical communication between the terminal apparatus 100 and the base station apparatus 200. The operation in this case is the same as and/or similar to that in FIGs. 23 and 24.

Here, when the color to be used for optical communication is added, the terminal apparatus 100 may notify the base station apparatus 200 of transmitting information, in a color different from an original color, the same as the information transmitted in the original color (step S407). When the color to be used for optical communication is added, the terminal apparatus 100 may notify the base station apparatus 200 of transmitting information, in a color different from an original color, different from the information transmitted in the original color (step S407). When the color to be used for optical communication is added, the terminal apparatus 100 may request the base station apparatus 200 to transmit information, in a color different from an original color, the same as the information transmitted in the original color (step S407). When the color to be used for optical communication is added, the terminal apparatus 100 may request the base station apparatus 200 to transmit information, in a color different from an original color, different from the information transmitted in the original color (step S407).

### (2.3) Operation Example Relating to Load Balancing of Each Color

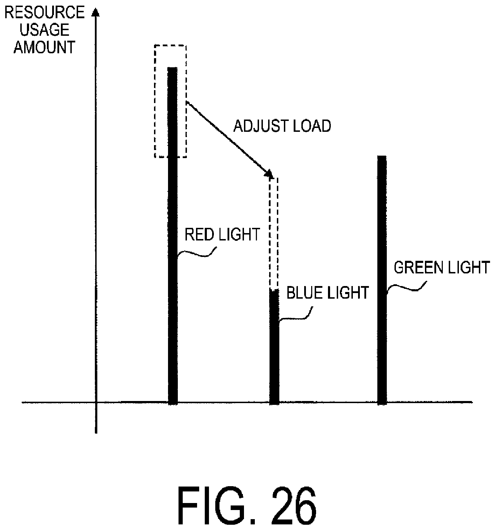

FIG. 26 is a diagram for describing this operation example. In this operation example, the color to be used for optical communication is changed in consideration of a communication resource usage for each color. As a result, when use of a specific color for optical communication by a number of terminal apparatuses 100 causes a bias toward the specific color, and a communication resource for the specific color become tight (in other words, when the load on the specific color increases), the load can be distributed to other colors. The illustrated example illustrates an example in which since a communication resource usage amount of red light is large, the communication color of the terminal apparatus 100 using the red light is changed to blue to reduce the communication resource usage amount of the red light.

In this operation example, the base station apparatus 200 changes the color to be used for the optical communication between the base station apparatus 200 and the terminal apparatus 100 based on the light reception intensity of the pilot optical signal measured by the terminal apparatus 100 and the communication resource usage of each color. For example, when establishing a communication link (optical communication connection) with the terminal apparatus 100, the base station apparatus 200 indicates the terminal apparatus 100 to feed back the light reception intensity of a pilot optical signal of a color (non-communication color) other than the communication color. The terminal apparatus 100 may perform feedback to the base station apparatus 200 when the light reception intensity of the pilot optical signal of the non-communication color is equal to or greater than the threshold. The terminal apparatus 100 may perform feedback at a constant cycle. The base station apparatus 200 changes the color to be used for optical communication with the terminal apparatus 100 based on the communication resource usage for each color and the fed-back light reception intensity of the pilot optical signal.

Instead of such a base station apparatus-initiative method, a terminal apparatus-initiative method may be used. For example, the base station apparatus 200 transmits load information for each color (communication resource usage for each color) in broadcast. The terminal apparatus 100 changes the color to be used for optical communication based on the light reception intensity of the pilot optical signal and the load information broadcast from the base station apparatus 200.

As a specific example of the communication color change in consideration of the communication resource usage for each color, when a resource usage of a certain color (color A) indicates that the resource is tight, while a resource of another color (color B) is not tight and the light reception intensity of the pilot optical signal is equal to or greater than the threshold, the base station apparatus 200 or the terminal apparatus 100 may perform communication in the color (color B). The terminal apparatus 100 may add an offset to the threshold used to select a color in accordance with the resource usage to determine a color to connect.

### (3) Other Embodiments

The above-described embodiments describe the example in which use of the identical color for the UL and the DL in the optical communication according to the TDD scheme enables the reversibility of the UL and DL propagation paths to be utilized. However, a frequency division duplex (FDD) scheme may be used instead of the TDD scheme. In this case, a pair of colors having close propagation characteristics (for example, a pair of blue and light blue, or a pair of green and yellow green) may be used as a pair of UL and DL. Specifically, the optical communication apparatus (the terminal apparatus 100 and the base station apparatus 200) performs UL communication and DL communication using a pair of colors having continuous wavelengths in a frequency division manner. Use of such a pair of colors enables the reversibility of the UL and DL propagation paths to be utilized even in the FDD scheme.

In the above-described embodiments, the optical communication apparatus (the terminal apparatus 100 and the base station apparatus 200) may include a sensor that measures communication environment parameters underwater (turbidity and/or plankton concentration). The optical communication apparatus may select the communication color based on a measurement value obtained by the sensor. For example, the optical communication apparatus may select red or yellow in response to turbidity and/or plankton concentration underwater being greater than a threshold.

In the above-described embodiment, an example in which the base station apparatus 200 is installed at a water surface has been described. However, the base station apparatus 200 may be installed at the bottom of water. In this case, the terminal apparatus 100 moving underwater may perform visible light communication with the base station apparatus 200 located below the terminal apparatus 100. The base station apparatus 200 may be installed at an underwater wall surface. The terminal apparatus 100 may perform visible light communication with the base station apparatus 200 while moving underwater in a vertical direction.

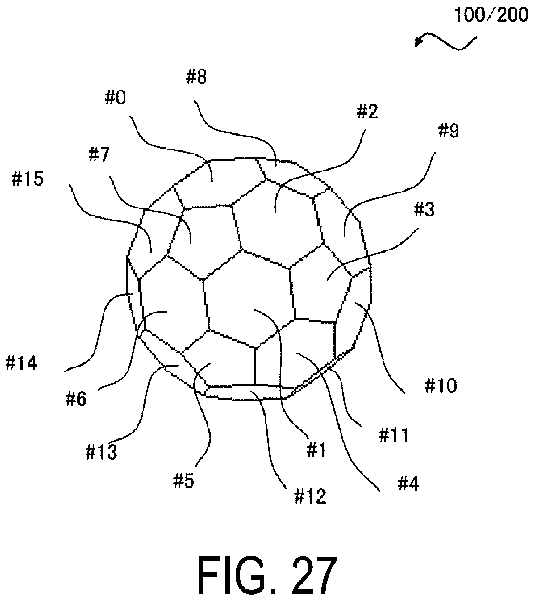

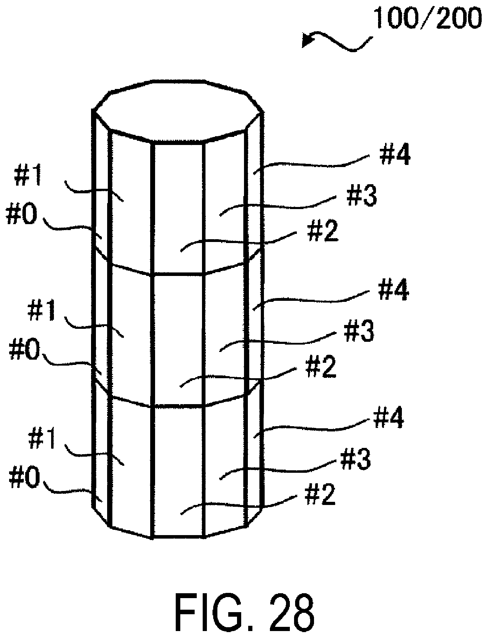

The above-described embodiments describe the example in which the transparent housing 150 of the terminal apparatus 100 and the transparent housing 250 of the base station apparatus 200 each are formed into a hemispherical shape. However, as illustrated in FIG. 27, the terminal apparatus 100 and/or the base station apparatus 200 may be formed into a spherical shape (in another viewpoint, a mirror ball shape) as a whole. For example, the terminal apparatus 100 and/or the base station apparatus 200 may form a polyhedron, each surface of the polyhedron may form a light receiving and emitting unit (in another viewpoint, a cluster), and a set of a light emitting element and a light receiving element may be arranged on each surface. As illustrated in FIG. 28, the terminal apparatus 100 and/or the base station apparatus 200 may be formed into a bar shape as a whole. For example, the terminal apparatus 100 and/or the base station apparatus 200 may form a prism, each side surface of the prism may form a light receiving and emitting unit (a cluster), and a set of a light emitting element and a light receiving element may be arranged on each side surface.

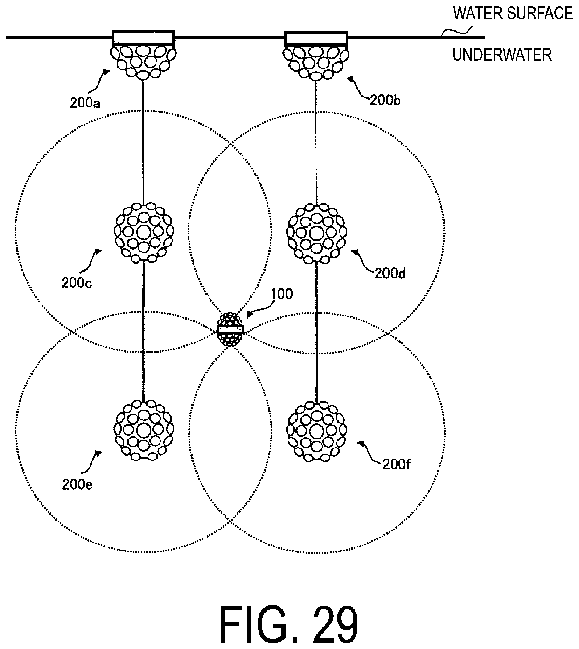

**In** order to form a wide communication area underwater without depending on the location and/or the direction of the terminal apparatus 100, a plurality of base station apparatuses 200 may be three dimensionally arranged underwater as illustrated in FIG. 29. Each of base station apparatuses 200a and 200b is located near a water surface and fixed to, for example, a buoy. Each of the base station apparatuses 200a and 200b has a hemispherical housing having a surface on which a plurality of light receiving and emitting units are arranged in an array. Each of the base station apparatuses 200a and 200b is communicably connected to the network 10 via the backhaul line. A base station apparatus 200c is suspended from the base station apparatus 200a via a rope and/or a cable (hereinafter referred to as "cable or the like"). A base station apparatus 200e is suspended from the base station apparatus 200c via a cable or the like. Similarly, a base station apparatus 200d is suspended via a cable or the like from the base station apparatus 200b adjacent to the base station apparatus 200a. A base station apparatus 200f is suspended from the base station apparatus 200d via a cable or the like. Each of the base stations 200c, 200d, 200e, and 200f has a spherical housing having a surface on which a plurality of light receiving and emitting units are arranged in an array.

A program that causes a computer to execute each piece of processing performed by the optical communication apparatus (the terminal apparatus 100 or the base station apparatus 200) may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each piece of processing performed by the terminal apparatus 100 or the base station apparatus 200 may be integrated, and at least a part of the terminal apparatus 100 or the base station apparatus 200 may be configured as a semiconductor integrated circuit (a chipset or an SoC).

The phrases "based on" and "depending on/in response to" used in the present disclosure do not mean "based only on" and "only depending on/in response to", unless specifically stated otherwise. The phrase "based on" means both "based only on" and "based at least in part on". Similarly, the phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used in the present disclosure as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiment has been described above in detail with reference to the drawings, but specific configurations are not limited to those described above, and various design variation can be made without departing from the gist of the present disclosure.

This application claims priority to Japanese Patent Application No. 2022-152931 (filed on September 26, 2022), the contents of which are incorporated herein by reference in their entirety.

### (4) Supplements

Features relating to the embodiments described above will be described below as supplement notes.

### Supplementary Note 1

An optical communication apparatus that performs optical communication that is wireless communication using light, the optical communication apparatus including:
an optical communicator including a plurality of light receiving elements and a plurality of light emitting elements and supporting the optical communication of a plurality of colors; and
a controller configured to control the optical communicator to perform reception of an optical signal from another optical communication apparatus and transmission of an optical signal to the other optical communication apparatus by using an identical color selected from among the plurality of colors and/or a pair of colors having continuous wavelengths.

### Supplementary Note 2

The optical communication apparatus according to supplementary note 1, wherein the controller controls the optical communicator to perform, by using a time division duplex scheme, the reception and the transmission using the identical color in a time division manner.

### Supplementary Note 3

The optical communication apparatus according to supplementary note 2, wherein when the optical communication apparatus performs the optical communication underwater, the controller
controls the optical communicator to transmit and receive an optical signal of a first color when a distance between the optical communication apparatus and the other optical communication apparatus is a first distance and
controls the optical communicator to transmit and receive an optical signal of a second color having an attenuation rate underwater smaller than the first color when the distance is a second distance larger than the first distance.

### Supplementary Note 4

The optical communication apparatus according to supplementary note 1, wherein the controller controls the optical communicator to perform, by using a frequency division duplex scheme, the reception and the transmission using the pair of colors in a frequency division manner.

### Supplementary Note 5

The optical communication apparatus according to supplementary note 1, wherein
the controller controls the optical communicator and thus causes a light emitting element of the plurality of light emitting elements close to a light receiving element of the plurality of light receiving elements configured to receive an optical signal from the other optical communication apparatus to transmit an optical signal to the other optical communication apparatus.

### Supplementary Note 6

The optical communication apparatus according to supplementary note 5, wherein the controller
estimates, based on the optical signal received by the light receiving element from the other optical communication apparatus, a propagation path state between the optical communication apparatus and the other optical communication apparatus and
controls, based on the estimated propagation path state, transmission of the optical signal from the light emitting element to the other optical communication apparatus.

### Supplementary Note 7

The optical communication apparatus according to any one of supplementary notes 1 to 6, wherein the plurality of light receiving elements and the plurality of light emitting elements are arranged in a two dimensional array along a curved surface of the optical communication apparatus.

### Supplementary Note 8

The optical communication apparatus according to supplementary note 7, wherein one or more light receiving elements and one or more light emitting elements are alternately arranged in a vertical direction and a horizontal direction of the two dimensional array.

### Supplementary Note 9

The optical communication apparatus according to supplementary note 8, wherein the controller controls the optical communicator and thus causes a light emitting element of the one or more light receiving elements surrounded by a plurality of light receiving elements configured to receive an optical signal from the other optical communication apparatus at a predetermined light reception intensity or higher to transmit an optical signal to the other optical communication apparatus.

### Supplementary Note 10

The optical communication apparatus according to any one of supplementary notes 1 to 6, wherein
the plurality of light receiving elements and the plurality of light emitting elements constitute a plurality of clusters arranged on a curved surface of the optical communication apparatus, and in each of the plurality of clusters, two or more light receiving elements of the plurality of light receiving elements are arranged close to one or more light emitting elements of the plurality of light emitting elements, and thus the two or more light receiving elements surround the one or more light emitting elements.

### Supplementary Note 11

The optical communication apparatus according to supplementary note 10, wherein the controller
estimates, based on optical signals received by the plurality of light receiving elements in one cluster from the other optical communication apparatus, a propagation path state between the optical communication apparatus and the other optical communication apparatus and controls, based on the propagation path state estimated, transmission of the optical signal from the light emitting element in the one cluster to the other optical communication apparatus.

### Supplementary Note 12

The optical communication apparatus according to supplementary note 10, wherein in each of the plurality of clusters, the two or more light receiving elements and the one or more light emitting elements are arranged on an identical plane, and thus optical axes of the two or more light receiving elements and the one or more light emitting elements are directed in the same direction.

### Supplementary Note 13

The optical communication apparatus according to supplementary note 1, wherein in the plurality of light receiving elements and the plurality of light emitting elements, the light receiving element and the light emitting element constituting a pair consisting of the light receiving element and the light emitting element next to each other are adjacently arranged without a light shielding member being provided between the pair.

### Supplementary Note 14

The optical communication apparatus according to any one of supplementary notes 1 to 6, wherein
the optical communication apparatus is one of a terminal apparatus and a base station apparatus, the other optical communication apparatus is the other of the terminal apparatus and the base station apparatus,
the base station apparatus transmits pilot optical signals of a plurality of colors, and
the controller selects, based on a light reception intensity of a pilot optical signal of each of the plurality of colors of the pilot optical signals received by the terminal apparatus from the base station apparatus, a color to be used for optical communication between the base station apparatus and the terminal apparatus from among the plurality of colors.

### Supplementary Note 15

The optical communication apparatus according to supplementary note 14, wherein
the optical communication apparatus is the terminal apparatus, the other optical communication apparatus is the base station apparatus, and
the controller
specifies a color having the light reception intensity that is equal to or greater than the threshold and is the lowest, and
establishes an optical communication connection by transmitting an optical signal of the color specified to the base station apparatus.

### Supplementary Note 16

The optical communication apparatus according to supplementary note 15, wherein
the optical communicator receives a control optical signal which is broadcast from the base station apparatus and includes the threshold common to the plurality of colors or the threshold individual for each color, and
the controller compares the light reception intensity with the threshold received from the base station apparatus.

### Supplementary Note 17

The optical communication apparatus according to supplementary note 14, wherein
after establishing an optical communication connection between the base station apparatus and the terminal apparatus, the controller changes and/or adds, based on the light reception intensity of the pilot optical signal of each of the plurality of colors received by the terminal apparatus from the base station apparatus, the color to be used for the optical communication between the base station apparatus and the terminal apparatus.

### Supplementary Note 18

The optical communication apparatus according to supplementary note 17, wherein the controller changes, based on the light reception intensity and a communication resource usage for each color, the color to be used for the optical communication between the base station apparatus and the terminal apparatus.

### Supplementary Note 19

The optical communication apparatus according to supplementary note 14, wherein
the optical communication apparatus is the terminal apparatus, and the other optical communication apparatus is the base station apparatus, and
after establishing an optical communication connection between the base station apparatus and the terminal apparatus, the controller controls the optical communicator to report, to the base station apparatus, the light reception intensity of the pilot optical signal received by the terminal apparatus from the base station apparatus periodically or when a predetermined threshold condition is satisfied.

### Supplementary Note 20

The optical communication apparatus according to supplementary note 14, wherein when two or more colors are simultaneously used for the optical communication between the base station apparatus and the terminal apparatus, the controller controls the optical communicator to communicate identical data in each of the two or more colors.

### Supplementary Note 21

The optical communication apparatus according to supplementary note 14, wherein when two or more colors are simultaneously used for the optical communication between the base station apparatus and the terminal apparatus, the controller controls the optical communicator to communicate different data in each of the two or more colors.

### Supplementary Note 22

An optical communication method for performing optical communication that is wireless communication using light, the optical communication method including a step of
controlling an optical communicator including a plurality of light receiving elements and a plurality of light emitting elements and supporting the optical communication of a plurality of colors, wherein
the step of controlling includes a step of controlling the optical communicator to perform reception of an optical signal from another optical communication apparatus and transmission of an optical signal to the other optical communication apparatus by using an identical color selected from among the plurality of colors and/or a pair of colors having continuous wavelengths.

### Supplementary Note 23

A program causing an optical communication apparatus that performs optical communication that is wireless communication using light to perform
a step of controlling an optical communicator including a plurality of light receiving elements and a plurality of light emitting elements and supporting the optical communication of a plurality of colors, wherein
the step of controlling includes a step of controlling the optical communicator to perform reception of an optical signal from another optical communication apparatus and transmission of an optical signal to the other optical communication apparatus by using an identical color selected from among the plurality of colors and/or a pair of colors having continuous wavelengths.

### REFERENCE SIGNS

1: Optical communication system
10: Network
100: Terminal apparatus
101: Optical communicator
111: Light receiving element
112: Receiver
121: Light emitting element
122: Transmitter
130: Controller
131: Processor
132: Memory
140: Moving mechanism
150: Transparent housing
160: Body part
200: Base station apparatus
201: Optical communicator
211: Light receiving element
212: Receiver
221: Light emitting element
222: Transmitter
230: Controller
231: Processor
232: Memory
240: Backhaul communicator
241: Network communicator
242: Inter-base station communicator
250: Transparent housing
260: Body part
1121: Bandpass filter

## Claims

1. An optical communication apparatus that performs optical communication that is wireless communication using light, the optical communication apparatus comprising:
an optical communicator comprising a plurality of light receiving elements and a plurality of light emitting elements and supporting the optical communication of a plurality of colors; and
a controller configured to control the optical communicator to perform reception of an optical signal from another optical communication apparatus and transmission of an optical signal to the other optical communication apparatus by using an identical color selected from among the plurality of colors and/or a pair of colors having continuous wavelengths.

2. The optical communication apparatus according to claim 1, wherein the controller controls the optical communicator to perform, by using a time division duplex scheme, the reception and the transmission using the identical color in a time division manner.

3. The optical communication apparatus according to claim 2, wherein
when the optical communication apparatus performs the optical communication underwater, the controller
controls the optical communicator to transmit and receive an optical signal of a first color when a distance between the optical communication apparatus and the other optical communication apparatus is a first distance and
controls the optical communicator to transmit and receive an optical signal of a second color having an attenuation rate underwater smaller than the first color when the distance is a second distance larger than the first distance.

4. The optical communication apparatus according to claim 1, wherein the controller controls the optical communicator to perform, by using a frequency division duplex scheme, the reception and the transmission using the pair of colors in a frequency division manner.

5. The optical communication apparatus according to claim 1, wherein the controller controls the optical communicator and thus causes a light emitting element of the plurality of light emitting elements close to a light receiving element of the plurality of light receiving elements configured to receive an optical signal from the other optical communication apparatus to transmit an optical signal to the other optical communication apparatus.

6. The optical communication apparatus according to claim 5, wherein
the controller
estimates, based on the optical signal received by the light receiving element from the other optical communication apparatus, a propagation path state between the optical communication apparatus and the other optical communication apparatus and
controls, based on the propagation path state estimated, transmission of the optical signal from the light emitting element to the other optical communication apparatus.

7. The optical communication apparatus according to any one of claims 1 to 6, wherein
the plurality of light receiving elements and the plurality of light emitting elements are arranged in a two dimensional array along a curved surface of the optical communication apparatus.

8. The optical communication apparatus according to claim 7, wherein
one or more light receiving elements and one or more light emitting elements are alternately arranged in a vertical direction and a horizontal direction of the two dimensional array.

9. The optical communication apparatus according to claim 8, wherein the controller controls the optical communicator and thus causes the light emitting element surrounded by a plurality of light receiving elements configured to receive an optical signal from the other optical communication apparatus at a predetermined light reception intensity or higher to transmit an optical signal to the other optical communication apparatus.

10. The optical communication apparatus according to any one of claims 1 to 6, wherein
the plurality of light receiving elements and the plurality of light emitting elements constitute a plurality of clusters arranged on a curved surface of the optical communication apparatus, and
in each of the plurality of clusters, two or more light receiving elements of the plurality of light receiving elements are arranged close to one or more light emitting elements of the plurality of light emitting elements, and thus the two or more light receiving elements surround the one or more light emitting elements.

11. The optical communication apparatus according to claim 10, wherein
the controller
estimates, based on optical signals received by the plurality of light receiving elements in one cluster from the other optical communication apparatus, a propagation path state between the optical communication apparatus and the other optical communication apparatus and
controls, based on the estimated propagation path state, transmission of the optical signal from the light emitting element in the one cluster to the other optical communication apparatus.

12. The optical communication apparatus according to claim 10, wherein in each of the plurality of clusters, the two or more light receiving elements and the one or more light emitting elements are arranged on an identical plane, and thus optical axes of the two or more light receiving elements and the one or more light emitting elements are directed in the same direction.

13. The optical communication apparatus according to claim 1, wherein in the plurality of light receiving elements and the plurality of light emitting elements, the light receiving element and the light emitting element constituting a pair consisting of the light receiving element and the light emitting element next to each other are adjacently arranged without a light shielding member being provided between the pair.

14. The optical communication apparatus according to any one of claims 1 to 6, wherein
the optical communication apparatus is one of a terminal apparatus and a base station apparatus, the other optical communication apparatus is the other of the terminal apparatus and the base station apparatus,
the base station apparatus transmits pilot optical signals of a plurality of colors, and
the controller selects, based on a light reception intensity of a pilot optical signal of each of the plurality of colors of the pilot optical signals received by the terminal apparatus from the base station apparatus, a color to be used for optical communication between the base station apparatus and the terminal apparatus from among the plurality of colors.

15. The optical communication apparatus according to claim 14, wherein
the optical communication apparatus is the terminal apparatus, the other optical communication apparatus is the base station apparatus, and
the controller
specifies a color having the light reception intensity that is equal to or greater than the threshold and is the lowest and
establishes an optical communication connection by transmitting an optical signal of the color specified to the base station apparatus.

16. The optical communication apparatus according to claim 15, wherein
the optical communicator receives a control optical signal which is broadcast from the base station apparatus and comprises the threshold common to the plurality of colors or the threshold individual for each color, and
the controller compares the light reception intensity with the threshold received from the base station apparatus.

17. The optical communication apparatus according to claim 14, wherein after establishing an optical communication connection between the base station apparatus and the terminal apparatus, the controller changes and/or adds, based on the light reception intensity of the pilot optical signal of each of the plurality of colors received by the terminal apparatus from the base station apparatus, the color to be used for the optical communication between the base station apparatus and the terminal apparatus.

18. The optical communication apparatus according to claim 17, wherein the controller changes, based on the light reception intensity and a communication resource usage for each color, the color to be used for the optical communication between the base station apparatus and the terminal apparatus.

19. The optical communication apparatus according to claim 14, wherein
the optical communication apparatus is the terminal apparatus, the other optical communication apparatus is the base station apparatus, and
after establishing an optical communication connection between the base station apparatus and the terminal apparatus, the controller controls the optical communicator to report, to the base station apparatus, the light reception intensity of the pilot optical signal received by the terminal apparatus from the base station apparatus periodically or when a predetermined threshold condition is satisfied.

20. The optical communication apparatus according to claim 14, wherein when two or more colors are simultaneously used for the optical communication between the base station apparatus and the terminal apparatus, the controller controls the optical communicator to communicate identical data in each of the two or more colors.

21. The optical communication apparatus according to claim 14, wherein when two or more colors are simultaneously used for the optical communication between the base station apparatus and the terminal apparatus, the controller controls the optical communicator to communicate different data in each of the two or more colors.

22. An optical communication method for performing optical communication that is wireless communication using light, the optical communication method comprising
controlling an optical communicator comprising a plurality of light receiving elements and a plurality of light emitting elements and supporting the optical communication of a plurality of colors, wherein
the controlling comprises controlling the optical communicator to perform reception of an optical signal from another optical communication apparatus and transmission of an optical signal to the other optical communication apparatus by using an identical color selected from among the plurality of colors and/or a pair of colors having continuous wavelengths.

23. A program causing an optical communication apparatus that performs optical communication that is wireless communication using light to perform
controlling an optical communicator comprising a plurality of light receiving elements and a plurality of light emitting elements and supporting the optical communication of a plurality of colors, wherein
the controlling comprises controlling the optical communicator to perform reception of an optical signal from another optical communication apparatus and transmission of an optical signal to the other optical communication apparatus by using an identical color selected from among the plurality of colors and/or a pair of colors having continuous wavelengths.
